# EUROPÄISCHE PATENTSCHRIFT

(11) **EP 3 755 951 B1**
(45) Veröffentlichungstag und Bekanntmachung des Hinweises auf die Patenterteilung: **09.04.2025**
(21) Anmeldenummer: 19707747.2
(22) Anmeldetag: 20.02.2019
(51) Int. Cl.: F24D 13/02, H05B 1/00, H05B 3/06, F24D 19/10

(54) **VERBINDUNGSEINHEIT, FLÄCHENELEMENT ZUM BEREITSTELLEN ZUMINDEST EINER ERSTEN ELEKTROBASIERTEN FUNKTION MIT EINER SOLCHEN VERBINDUNGSEINHEIT, ELEKTROINSTALLATION SOWIE VERFAHREN ZUM BEREITSTELLEN ZUMINDEST EINER ERSTEN ELEKTROBASIERTEN FUNKTION**
CONNECTING UNIT, SURFACE ELEMENT FOR PROVIDING AT LEAST ONE FIRST ELECTRO-BASED FUNCTION WITH SUCH A CONNECTING UNIT; ELECTRICAL INSTALLATION, AND METHOD FOR PROVIDING AT LEAST ONE FIRST ELECTRO-BASED FUNCTION
UNITÉ DE LIAISON, ÉLÉMENT DE SURFACE CONÇU POUR FOURNIR AU MOINS UNE PREMIÈRE FONCTION FONDÉE SUR L'ÉLECTRICITÉ AVEC UNE TELLE UNITÉ DE LIAISON, INSTALLATION ÉLECTRIQUE ET PROCÉDÉ POUR FOURNIR AU MOINS UNE PREMIÈRE FONCTION FONDÉE SUR L'ÉLECTRICITÉ

(30) Priorität: 20.02.2018 DE 102018103791
(43) Veröffentlichungstag der Anmeldung: 30.12.2020
(73) Patentinhaber: ARDEX GmbH, 58453 Witten (DE)
(72) Erfinder: KOLLMANN, Philipp Karl, 8583 Edelschrott (AT); SCHREIBER, Emanuel, 58313 Herdecke (DE); SIEKSMEIER, Jörg, 45133 Essen (DE); SCHRÖDER, Marco, 59555 Lippstadt (DE)
(74) Vertreter: Bals & Vogel Patentanwälte PartGmbB
(86) Internationale Anmeldenummer: PCT/EP2019/054236
(87) Internationale Veröffentlichungsnummer: WO 2019/162337

(56) Entgegenhaltungen:
- EP-A1- 0 172 302
- EP-A1- 2 921 084
- EP-A2- 2 034 246
- WO-A1-00/62581
- WO-A2-2008/091001
- CN-A- 106 765 475
- DE-A1- 10 052 345
- DE-A1- 19 730 853
- US-A1- 2012 168 427

## Beschreibung

Die Erfindung betrifft eine Verbindungseinheit zum Herstellen einer elektrischen Verbindung, ein Flächenelement, beinhaltend eine solche Verbindungseinheit, zum Bereitstellen zumindest einer ersten elektrobasierten Funktion in einem Raum eines Gebäudes, eine Elektroinstallation zum Bereitstellen zumindest einer ersten elektrobasierten Funktion in einem Raum eines Gebäudes sowie ein Verfahren zum Bereitstellen zumindest einer ersten elektrobasierten Funktion in einem Raum eines Gebäudes.

Aus dem Stand der Technik sind zum Beispiel Fußbodenheizungen bekannt, welche elektrobasiert sind und beispielsweise ein Leiterelement, wie ein Kabel, aufweisen, welches bei einer Bestromung Wärme zum Heizen eines Raumes eines Gebäudes abgeben kann. Um derartige Leiterelemente zu verlegen, werden entweder mehrere Leiterelemente hintereinander, zum Beispiel durch Kabelverbinder verpresst oder ein langes Kabel wird entsprechend der Geometrie des Raumes verlegt. Um eine effektive Heizleistung zu ermöglichen, muss der Monteur dabei jedoch präzise vorgehen und das Leiterelement entsprechend gleichmäßig verlegen. Bei Verpressungen ist es dabei beispielsweise von Nachteil, dass der Austausch von einzelnen Elementen zerstörungsfrei nicht möglich ist, da das Verpressen eine irreversible Verbindung darstellt.

Weiterhin sind Heizvorrichtungen aus den Dokumenten EP 2 921 084 A1, US 2012/0168427 A1, DE 100 52 345 A1, WO 2008/091001 A2, DE 197 30 853 A1, CN 106 765 475 A, WO 00/62581 A1, EP 2 034 246 A2 sowie EP 0 172 302 A1 bekannt.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, ein Bereitstellen zumindest einer ersten elektrobasierten Funktion in einem Raum eines Gebäudes hinsichtlich der Montage, vorzugsweise bei gleichzeitig verbessertem Funktionsumfang, zu vereinfachen.

Voranstehende Aufgabe wird gelöst durch eine Verbindungseinheit mit den Merkmalen des Anspruchs 1, ein Flächenelement mit den Merkmalen des Anspruchs 5, eine Elektroinstallation mit den Merkmalen des Anspruchs 14 sowie ein Verfahren mit den Merkmalen des Anspruchs 15.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Flächenelement beschrieben worden sind, selbstverständlich auch im Zusammenhang mit der erfindungsgemäßen Elektroinstallation und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß weist das Flächenelement zum Bereitstellen einer ersten elektrobasierten Funktion in einem Raum eines Gebäudes eine flexible, flächig verlegbare Basiseinheit mit zumindest einem ersten elektrischen Funktionsmittel zum Ausführen zumindest der ersten elektrobasierten Funktion auf. Dabei ist das elektrische Funktionsmittel mit einem elektrischen Anschluss verbunden und der elektrische Anschluss weist eine interne Verbindungsschnittstelle zum Herstellen einer reversiblen elektrischen Verbindung mit einer externen Gegenverbindungsschnittstelle auf. Erfindungsgemäß ist die Verbindungsschnittstelle zum Verbinden des ersten elektrischen Funktionsmittels mit einer Verbindungseinheit nach Anspruch 1 ausgebildet.

Vorzugsweise kann die Basiseinheit und/oder das Flächenelement plattenförmig ausgestaltet sein. Insbesondere kann das Flächenelement vorteilhafterweise eine Grundfläche von kleiner 2m x 2m, vorzugsweise von kleiner 1,5m x 1,5m, besonders bevorzugt von kleiner 1,1m x 0,8m oder kleiner 0,4m x 0,4m, aufweisen. Das Flächenelement kann vorzugsweise auf einem Bauelement des Gebäudes verlegbar sein. Somit kann beispielsweise ein Rohbau eines Fußbodens mit dem Flächenelement ausgekleidet werden, um die erste elektrobasierte Funktion, insbesondere über die gesamte Fläche des Raumes, zur Verfügung zu stellen. Unter der ersten elektrobasierten Funktion kann eine Heizfunktion, eine Sensorik, eine Beleuchtung oder dgl. verstanden werden. Dazu kann das erste elektrische Funktionsmittel einen Sensor, ein Heizmittel, ein Leuchtmittel oder dgl. umfassen. Die flexible, flächig verlegbare Basiseinheit weist vorzugsweise eine flächige Erstreckung auf. Insbesondere kann die flexible, flächig verlegbare Basiseinheit einen folienartigen Verbund bilden. Somit kann das Flächenelement mit der flexiblen, flächig verlegbaren Basiseinheit ein einzelnes Modul bilden, welches mit weiteren Modulen über eine Fläche des Raumes ausgelegt werden kann oder eigenständig im Raum verlegbar sein, um die erste elektrobasierte Funktion bereitzustellen. Unter flexibel kann dabei verstanden werden, dass die Basiseinheit zumindest bereichsweise biegbar und/oder elastisch ausgestaltet ist. Unter einer internen Verbindungsschnittstelle kann im Rahmen der Erfindung ferner eine Schnittstelle verstanden werden, welche Teil des Flächenelementes ist. Eine externe Gegenverbindungsschnittstelle kann vorzugsweise Teil eines weiteren Flächenelementes sein, wenn mehrere Flächenelemente in dem Raum verlegt werden sollen, insbesondere um gemeinsam die erste elektrobasierte Funktion über eine Fläche des Raumes zur Verfügung stellen zu können. Ferner ist es denkbar, dass die externe Gegenverbindungsschnittstelle an einer Energiequelle und/oder einer Steuereinheit vorgesehen ist, um das Flächenelement in einfacher Art und Weise an die Energiequelle und/oder die Steuereinheit anbinden zu können. Dadurch kann die erste elektrobasierte Funktion vorzugsweise zentral angesteuert bzw. mit Energie versorgt werden. Durch die reversible elektrische Verbindung ist es ferner möglich, die elektrische Verbindung wieder aufzuheben, wenn beispielsweise die Montage noch einmal korrigiert werden soll. Ferner kann dies von Vorteil sein, wenn zum Kalibrieren des Flächenelementes, zum Beispiel zur Anpassung an Umgebungsbedingungen im Raum, das erste elektrische Funktionsmittel zunächst an ein Kalibriergerät angeschlossen werden soll und anschließend, insbesondere dauerhaft, mit einem zentralen Steuergerät verbunden werden soll. Darüber hinaus kann durch die reversible elektrische Verbindung eine intuitive Montagemöglichkeit geschaffen sein, da beispielsweise Gefahrenstoffe, wie bestimmte Klebstoffe, vermieden werden können, oder Gerätschaften, welche zunächst z.B. für eine korrekte Verpressung eine Einweisung benötigen, nicht notwendig sind. Vorzugsweise kann die interne Verbindungsschnittstelle zum mittelbaren oder unmittelbaren Herstellen einer reversiblen elektrischen Verbindung mit einer externen Gegenverbindungsschnittstelle ausgebildet sein. Insbesondere können die interne Verbindungsschnittstelle und die externe Gegenverbindungsschnittstelle gleich ausgebildet sein. In diesem Fall können zusätzliche Komponenten eingesetzt werden, um mittelbar die Verbindung zwischen der internen Verbindungsschnittstelle und der externen Gegenverbindungsschnittstelle herzustellen.

Bei einem erfindungsgemäßen Flächenelement ist es ferner denkbar, dass die interne Verbindungsschnittstelle ein Verbindungsmittel umfasst, welches form- und/oder kraftschlüssig mit einem Gegenverbindungsmittel der externen Gegenverbindungsschnittstelle verbindbar ist. Dadurch kann eine mechanische Verbindung geschaffen sein, welche eine Kontaktierung der internen Verbindungsschnittstelle mit der externen Gegenverbindungsschnittstelle ermöglicht und gleichzeitig eine mechanische Befestigung bietet. Dadurch kann insbesondere die Sicherheit gesteigert sein, so dass auch während des Betriebes des Flächenelementes und/oder durch Umgebungsbedingungen ein Lösen der elektrischen Verbindung verhindert wird. Damit kann der elektrische Anschluss unabhängig oder im Wesentlichen unabhängig von weiteren Befestigungen des Flächenelementes sein. Wenn beispielsweise mehrere Flächenelemente miteinander verbunden sind, kann die form- und/oder kraftschlüssige Verbindung der internen Verbindungsschnittstelle mit der externen Gegenverbindungsschnittstelle eine zusätzliche Haltekraft bereitstellen, so dass zumindest im Bereich der elektrischen Verbindung die Verbindung der Flächenelemente nicht aufgehoben wird.

Im Rahmen der Erfindung ist es ferner denkbar, dass das Verbindungsmittel ein Rastmittel, insbesondere einen Druckknopf, umfasst. Das Rastmittel ist vorzugsweise dazu geeignet, mit einem Gegenrastmittel der externen Gegenverbindungsschnittstelle eine formschlüssige Verbindung herzustellen. Durch ein Verrasten der internen Verbindungsschnittstelle mit der externen Gegenverbindungsschnittstelle kann eine sichere Verbindung gewährleistet sein, welche bei der Montage des Flächenelementes oder mehrerer Flächenelemente in einfacher Art und Weise hergestellt werden kann. Eine Verbindung durch ein Rastmittel kann insbesondere intuitiv durch einen Monteur herstellbar sein, so dass keine weitere Einweisung für die Montage des Flächenelementes bzw. zur Bedienung des Rastmittels notwendig sein kann. Die Verwendung eines Druckknopfes begünstigt ferner auch eine Serienproduktion des Flächenelementes, insbesondere abseits einer Baustelle des Gebäudes. So kann der Druckknopf beispielsweise mit der flexiblen, flächig verlegbaren Basiseinheit verclipst oder vernietet werden. Die Anbringung des Druckknopfes kann beispielsweise automatisiert durchführbar sein. Darüber hinaus können insbesondere die Einzelteile des Druckknopfes in einfacher Art und Weise automatisiert herstellbar sein, beispielsweise durch Tiefziehen und/oder Stanzen von Blechteilen. Im Falle einer Fehlmontage ist ein Druckknopf ferner schnell und einfach lösbar.

Vorteilhafterweise kann bei einem erfindungsgemäßen Flächenelement eine interne Gegenverbindungsschnittstelle vorgesehen sein, welche mit einer externen Verbindungsschnittstelle zum reversiblen Herstellen einer elektrischen Verbindung verbindbar ist. Insbesondere kann das erste elektrische Funktionsmittel mit der internen Gegenverbindungsschnittstelle elektrisch verbunden sein. Bei der elektrischen Verbindung kann es sich insbesondere um eine weitere elektrische Verbindung handeln. Dadurch, dass das Flächenelement eine interne Gegenverbindungsschnittstelle aufweisen kann, durch welche insbesondere parallel zur internen Verbindungsschnittstelle eine weitere elektrische Verbindung reversibel herstellbar ist, kann die Verbindbarkeit des Flächenelementes mit einem weiteren Flächenelement gesteigert sein, wenn beide Flächenelemente beispielsweise zur Ausgestaltung der ersten elektrobasierten Funktion in dem Raum des Gebäudes verlegt werden. Dadurch ist eine Kombinationsmöglichkeit der Flächenelemente untereinander gesteigert, wenn beispielsweise durch das Vorsehen von internen Verbindungsschnittstellen und internen Gegenverbindungsschnittstellen eine Kombinatorik der Anordnung der Flächenelemente vergrößert ist. Insbesondere kann dadurch eine Serienproduktion des Flächenelementes, vorzugsweise abseits der Baustelle des Gebäudes, weiter gesteigert sein, da standardmäßig jedes Flächenelement mit der gleichen Anzahl interner Verbindungsschnittstellen und interner Gegenverbindungsschnittstellen vorgesehen sein kann, so dass beispielsweise nicht zwischen Flächenelementen mit internen Verbindungsschnittstellen und Flächenelementen mit internen Gegenverbindungsschnittstellen unterschieden wird. Es kann somit ausreichen, einen einzigen Typ Flächenelement vorzusehen, um eine Kombination mehrerer Flächenelemente im Raum zu verlegen.

Vorzugsweise kann bei einem erfindungsgemäßen Flächenelement ein internes Gegenverbindungsmittel der internen Gegenverbindungsschnittstelle, ein Gegenrastmittel, insbesondere eine Öse, umfassen. Das Gegenrastmittel kann vorzugsweise mit dem Rastmittel der internen Verbindungsschnittstelle kompatibel sein, so dass zwei gleichartige Flächenelemente auf einfache Art und Weise formschlüssig verbindbar sein können. Insbesondere kann somit die Öse kompatibel zu einem Druckknopf ausgebildet sein. Die Öse kann analoge Vorteile zum Druckknopf bietet. So kann die Öse Stanz- und/oder Tiefziehteile umfassen, welche Blechteile sein können. Ferner kann die Öse durch Verclipsen oder Vernieten mit der Basiseinheit verbunden sein. Dies führt zu weiteren Vorteilen in der Serienproduktion, da dadurch eine Automatisierbarkeit der Produktion des Flächenelementes gesteigert sein kann. Insbesondere kann bei der Herstellung des Flächenelementes somit die Öse und der Druckknopf präzise an den dafür vorgesehenen Stellen in einem automatisierten Verfahren vorgesehen werden.

Bei einem erfindungsgemäßen Flächenelement ist es ferner denkbar, dass der elektrische Anschluss in einem Randbereich der Basiseinheit angeordnet ist, wobei das erste elektrische Funktionsmittel durch zumindest eine Leiterbahn mit dem elektrischen Anschluss verbunden ist. Somit kann für die erste elektrische Funktion vorzugsweise ein großer Bereich der Basiseinheit genutzt werden, während der elektrische Anschluss im Randbereich die Verbindung bereitstellen kann. Dadurch kann eine Notwendigkeit einer Überlappung mehrerer Basiseinheiten gering gehalten werden, wenn mehrere Flächenelemente miteinander verlegt werden. Dadurch kann eine Beeinflussung mehrerer elektrischer Funktionsmittel untereinander reduziert sein, wenn mehrere Flächenelemente miteinander verlegt werden. Die zumindest eine Leiterbahn kann vorzugsweise Silber aufweisen, so dass die Leiterbahn nur einen geringeren Widerstand aufweist. Folglich kann ein Energieverlust reduziert sein. Durch die Leiterbahn ist es ferner möglich, das erste elektrische Funktionsmittel auf dem Flächenelement anzuordnen, ohne dass dieses unmittelbar am elektrischen Anschluss angeordnet ist. Vorzugsweise können zwei oder mehr Leiterbahnen vorgesehen sein, um das erste elektrische Funktionsmittel mit dem elektrischen Anschluss zu verbinden. So ist es denkbar, dass zwei Leiterbahnen vorgesehen sind, die unterschiedliche elektrische Potentiale aufweisen oder an die unterschiedliche elektrische Potentiale anlegbar sind.

Im Rahmen der Erfindung kann ferner vorgesehen sein, dass die Basiseinheit ein erstes Trägerelement aufweist, auf welchem das erste elektrische Funktionsmittel, insbesondere in einem Mittenbereich der Basiseinheit, angeordnet ist. Das erste Trägerelement kann vorzugsweise einen Kunststoff aufweisen. Insbesondere kann das erste Trägerelement einen Grundkörper für das erste elektrische Funktionsmittel bieten. Das erste Trägerelement kann somit vorzugsweise als Folie ausgestaltet sein. Insbesondere kann ferner das erste elektrische Funktionsmittel auf das erste Trägerelement aufgedruckt sein, so dass das erste Trägerelement insbesondere als Platine dient. Die interne Verbindungsschnittstelle und/oder die interne Gegenverbindungsschnittstelle kann vorzugsweise direkt mit dem ersten Trägerelement verbunden sein, so dass der Anschluss am ersten Trägerelement bereitgestellt werden kann. Dadurch kann eine Dicke des Flächenelementes reduziert sein und sich beispielsweise eine einfache Verlegbarkeit für einen Fußboden ergeben, durch welche der Fußboden nicht oder nur geringfügig erhöht ist. Der Mittenbereich kann vorzugsweise einen zentralen Bereich der Basiseinheit umfassen. Insbesondere kann somit die erste elektrische Funktion im Mittenbereich bereitgestellt werden, während der Anschluss im Randbereich der Basiseinheit vorgesehen sein kann. Durch das erste Trägerelement kann ferner eine Verlegbarkeit bzw. Montierbarkeit des Flächenelementes weiter gesteigert sein, da dem Monteur eine bestimmte Ausbreitung der Basiseinheit vorgegeben sein kann und ferner das erste elektrische Funktionsmittel einfacher handhabbar sein kann.

Bei einem erfindungsgemäßen Flächenelement kann vorteilhafterweise vorgesehen sein, dass die Basiseinheit ein zweites elektrisches Funktionsmittel zum Ausführen einer zweiten elektrobasierten Funktion aufweist. Vorzugsweise kann das zweite elektrische Funktionsmittel zum Ausführen der zweiten elektrobasierten Funktion mit dem elektrischen Anschluss oder einem weiteren elektrischen Anschluss verbunden sein. Durch das zweite elektrische Funktionsmittel, welches sich vorzugsweise in seiner Funktion vom ersten elektrischen Funktionsmittel unterscheidet, kann die Einsetzbarkeit des Flächenelementes ferner gesteigert sein. Somit können durch das Flächenelement zwei insbesondere unterschiedliche elektrische Funktionen in dem Raum des Gebäudes bereitgestellt werden. Vorzugsweise kann die elektrische Verbindung des elektrischen Anschlusses dazu genutzt werden, sowohl das erste als auch das zweite elektrische Funktionsmittel extern zu verbinden. Dazu kann die interne Verbindungsschnittstelle vorzugsweise mehrere Verbindungsmittel aufweisen, welche insbesondere gleichartig ausgebildet sein können. So ist es denkbar, dass die interne Verbindungsschnittstelle zumindest einen Druckknopf zur Verbindung des ersten elektrischen Funktionsmittels aufweist und einen Druckknopf zur Verbindung des zweiten elektrischen Funktionsmittels. Insbesondere können durch den elektrischen Anschluss somit mehrere erste elektrische Funktionsmittel miteinander verbunden werden und mehrere zweite elektrische Funktionsmittel miteinander verbunden werden, so dass bei einer Verlegung mehrerer Flächenelemente in Kombination diese jeweils durch Herstellen der elektrischen Verbindung reversibel miteinander verbindbar sind. Somit kann die intuitive Bedienung und einfache Verlegbarkeit des Flächenelementes auch für das zweite elektrische Funktionsmittel bereitgestellt werden. Vorzugsweise kann die Basiseinheit ein zweites Trägerelement aufweisen, auf welchem das zweite elektrische Funktionsmittel angeordnet ist. Das zweite Trägerelement kann vorteilhafterweise zum ersten Trägerelement beabstandet sein. Ferner kann der elektrische Anschluss dazu ausgebildet sein, dass das erste elektrische Funktionsmittel mit einer ersten Spannung, vorzugsweise 230 Volt, und das zweite elektrische Funktionsmittel mit einer zweiten Spannung, vorzugsweise 12 Volt, die elektrische Verbindung versorgbar ist.

Bei einem erfindungsgemäßen Flächenelement ist vorgesehen, dass die Verbindungsschnittstelle zum Verbinden des ersten elektrischen Funktionsmittels und/oder des zweiten elektrischen Funktionsmittels mit einer erfindungsgemäßen Verbindungseinheit ausgebildet ist, insbesondere wobei die Verbindungsschnittstelle zumindest ein Ausrichtmittel umfasst, welches mit einer Positionierhilfe der Verbindungseinheit in Wirkverbindung bringbar ist, so dass eine Fehlstellung der Verbindungseinheit verhinderbar ist. Durch die Verbindungseinheit können z.B. gleichartige Verbindungsschnittstellen und Gegenverbindungsschnittstellen miteinander koppelbar sein. Ferner kann auf der Baustelle entschieden werden, ob der entsprechende elektrische Anschluss genutzt werden soll und folglich mit der Verbindungseinheit ausgestattet wird oder, ob der entsprechende elektrische Anschluss mit einem Blindstück versehen wird, um die elektrischen Kontakte zu isolieren. Das Ausrichtmittel kann Öffnungen und/oder Vorsprünge umfassen, die mit einer Positionierhilfe der Verbindungseinheit korrespondieren. Die Verbindungseinheit kann insbesondere als eine Zusatzbaugruppe bereitgestellt sein, die erst bei der Montage der Elektroinstallation hinzugefügt wird. Durch die Verbindungseinheit kann eine einfache, baustellengerechte Verbindungsmöglichkeit geschaffen sein. Durch eine entsprechende Anordnung des Ausrichtmittels kann damit lediglich eine korrekte oder eine korrekte und eine offensichtlich bzw. auffällig falsche Stellung der Verbindungseinheit an der Verbindungsschnittstelle möglich sein. Die Verbindungsschnittstelle kann vorteilhafterweise dazu ausgebildet sein, mit der Verbindungseinheit kraft- und/oder formschlüssig verbunden zu werden. Insbesondere kann die Verbindungsschnittstelle für eine magnetische Verbindung mit der Verbindungseinheit ausgebildet sein. Dazu kann die Verbindungsschnittstelle einen Magneten oder ein magnetisierbares Material aufweisen. Dadurch kann eine besonders einfache und insbesondere baustellengerechte Verbindungsmöglichkeit geschaffen sein.

Insbesondere kann bei einem erfindungsgemäßen Flächenelement vorgesehen sein, dass das Ausrichtmittel mehrere, vorzugsweise drei, Öffnungen im ersten und/oder zweiten Trägerelement umfasst, durch welche Vorsprünge der Positionierhilfe zumindest teilweise hindurchsteckbar sind. Dadurch kann in einfacher Art und Weise eine formschlüssige Verbindung erzielt werden und eine Fehlstellung der Verbindungseinheit verhindert werden. Ferner sind die Öffnungen und Vorsprünge intuitiv auf der Baustelle kombinierbar, so dass die Verbindung der Flächenelemente einfach erlernbar ist.

Vorzugsweise kann bei einem erfindungsgemäßen Flächenelement vorgesehen sein, dass die Verbindungsschnittstelle zumindest eine Ausnehmung der Basiseinheit umfasst, in welche die Verbindungseinheit zumindest teilweise einbringbar ist, insbesondere wobei die Ausnehmung zumindest teilweise durch das erste und/oder zweite Trägerelement begrenzt ist. Die Ausnehmung kann insbesondere einen Ausschnitt aus dem Zwischenelement und dem ersten und/oder zweiten Trägerelement umfassen. Dadurch kann eine einfache Aufnahme für die Verbindungseinheit geschaffen sein. In Ausnehmungen, an welchen keine Verbindungseinheit angebracht werden soll, kann ein Blindstück vorgesehen sein, durch welches die Verbindungsschnittstelle geschützt ist. Wird die Ausnehmung durch das zweite, vorzugsweise das erste, Trägerelement begrenzt, kann am ersten und/oder zweiten Trägerelement ein Verbindungsmittel in Form einer elektrischen Kontaktierung vorgesehen sein, so dass die Verbindungseinheit in einfacher Art und Weise in einen elektrischen Kontakt mit dem Flächenelement bringbar ist. Um die Ausnehmung zu begrenzen, kann das erste und/oder zweite Trägerelement vorzugsweise die Ausnehmung überlappen. Ferner ist es denkbar, dass das erste und/oder zweite Trägerelement in der Verbindungseinheit magnetisch einklemmbar ist. Dadurch können ein elektrischer Kontakt und eine Fixierung der Verbindungseinheit an dem Flächenelement verbessert sein. Insbesondere kann das erste und/oder zweite Trägerelement dazu eine geringe Dicke aufweisen und/oder für ein magnetisches Feld zumindest bereichsweise durchlässig sein. Dadurch kann die Magnetkraft insbesondere durch das erste und/oder zweite Trägerelement hindurchwirken.

Weiterhin kann bei einem erfindungsgemäßen Flächenelement vorgesehen sein, dass die Verbindungsschnittstelle zumindest ein Verbindungsmittel mit einem elektrischen Kontakt zum elektrischen Verbinden des ersten elektrischen Funktionsmittels mit einem ersten Kontaktelement eines ersten Kontaktabschnitts der Verbindungseinheit und/oder einem elektrischen Kontakt zum elektrischen Verbinden des zweiten elektrischen Funktionsmittels mit einem zweiten Kontaktelement eines ersten Kontaktabschnitts der Verbindungseinheit aufweist. Insbesondere können die elektrischen Kontakte in der Ausnehmung offenliegen, so dass eine Platzierung und Kontaktierung der Verbindungseinheit in der Ausnehmung ausreicht, um die elektrische Verbindung herzustellen. Insbesondere kann der elektrische Kontakt zum Verbinden des ersten Funktionsmittels durch eine Leiterbahn, insbesondere einen Anschlussabschnitt der Leiterbahn, des Flächenelementes gebildet sein. Der elektrische Kontakt zum Verbinden des zweiten Funktionsmittels kann durch eine Datenleitung, insbesondere einen Anschlussabschnitt einer Datenleitung, gebildet sein.

Bei einem erfindungsgemäßen Flächenelement kann ferner vorgesehen sein, dass das erste und/oder zweite elektrische Funktionsmittel ein elektrisches Heizmittel zum Heizen des Raumes umfasst. Somit kann vorzugsweise durch Verlegen mehrerer Flächenelemente eine Fußbodenheizung des Raumes ausbildbar sein. Das elektrische Heizmittel kann vorzugsweise Widerstandselemente umfassen, welche bei Bestromung Wärme abgeben können. Durch die reversible elektrische Verbindung kann somit in intuitiver Art und Weise eine Ausgestaltung einer Flächenheizung, insbesondere einer Fußbodenheizung, begünstigt sein, so dass bei der Montage mehrerer Flächenelemente beispielsweise die Flächenelemente nebeneinander gelegt werden. Die reversible Verbindung kann gleichzeitig eine elektrische Kontaktierung ermöglichen, durch welche mehrere elektrische Heizmittel in Reihe und/oder parallel geschaltet werden können.

Es ist ferner bei einem erfindungsgemäßen Flächenelement denkbar, dass das erste und/oder zweite elektrische Funktionsmittel ein Erfassungsmittel zum Detektieren eines Ereignisses im Raum umfasst. Durch das Erfassungsmittel kann vorzugsweise eine Flächensensorik ausbildbar sein, insbesondere durch Verlegen mehrerer Flächenelemente. Dabei kann durch jedes Erfassungsmittel zumindest ein Erfassungsbereich oder mehrere Erfassungsbereiche überwachbar sein. Unter dem Ereignis kann vorzugsweise eine Anwesenheit und/oder Aktivität einer Person verstanden werden. Insbesondere kann das Erfassungsmittel zur kapazitiven Detektion des Ereignisses ausgebildet sein. Dabei kann das Erfassungsmittel beispielsweise zumindest eine oder mehrere Elektroden umfassen, durch welche ein elektrisches Feld herstellbar ist, so dass eine Änderung des elektrischen Feldes messbar sein kann. Dazu kann das Flächenelement mit einer zentralen Auswerteeinheit verbindbar sein oder eine oder mehrere dezentrale Auswerteeinheiten aufweisen.

Besonders bevorzugt kann das erste elektrische Funktionsmittel das elektrische Heizmittel zum Heizen des Raumes umfassen und das zweite elektrische Funktionsmittel das Erfassungsmittel zum Detektieren des Ereignisses im Raum. Somit kann durch Verlegen eines oder mehrerer Flächenelemente zum einen eine Flächenheizung und zum anderen eine Flächensensorik geschaffen werden, welche, insbesondere trotz des erhöhten Funktionsumfangs, intuitiv montierbar sein können.

Vorzugsweise kann bei einem erfindungsgemäßen Flächenelement vorgesehen sein, dass an der Basiseinheit, insbesondere in einem Randbereich der Basiseinheit, eine Befestigungsschnittstelle angeordnet ist. Die Befestigungsschnittstelle kann zusätzliche Sicherheit beim Verlegen des Flächenelementes, insbesondere auf einem Bauelement des Raumes, bieten. Somit kann durch die Befestigungsschnittstelle vorzugsweise eine zusätzliche mechanische Befestigungsmöglichkeit bereitgestellt werden, so dass ein Verrutschen des Flächenelementes im Einbauzustand verhinderbar ist. Vorzugsweise können der elektrische Anschluss und die Befestigungsschnittstelle in dem Randbereich der Basiseinheit vorgesehen sein, so dass ein Überlappen mehrerer Flächenelemente reduziert ist. Die Befestigungsschnittstelle kann dabei zur form-, kraft- und/oder stoffschlüssigen Befestigung des Flächenelementes, vorzugsweise mit einem weiteren Flächenelement, ausgebildet sein.

Vorteilhafterweise kann bei einem erfindungsgemäßen Flächenelement vorgesehen sein, dass die Befestigungsschnittstelle einen Klebebereich aufweist, insbesondere wobei der erste Klebebereich durch ein Klebeband gebildet ist. Dadurch kann eine intuitive Montagemöglichkeit des Flächenelementes weiter gesteigert sein, da ein Verkleben des Flächenelementes, insbesondere ohne vorherige Einweisung, durch einen Monteur leistbar ist und gleichzeitig schnell durchgeführt werden kann. Dadurch kann die Montagezeit zum Bereitstellen der ersten und/oder zweiten elektrobasierten Funktion im Raum reduziert sein. Durch ein Klebeband kann beispielsweise in einfacher Art und Weise in einem Mittenbereich des Flächenelementes ein vom Randbereich separater Klebebereich entstehen, so dass die Basiseinheit mit einer Schalldämpfungsschicht und/oder einer Abdichtungsschicht verbindbar sein oder verbunden sein kann. Der erste Klebebereich der Befestigungsschnittstelle kann dabei dazu vorgesehen sein, mehrere Flächenelemente mechanisch miteinander zu befestigen. Die Verwendung eines Klebebandes, insbesondere eines doppelseitigen Klebebandes, kann dabei mehrere Vorteile aufweisen. So kann das Klebeband beispielsweise eingeritzt werden, um den ersten und zweiten Klebebereich zu erzeugen. Dies ist auch noch auf der Baustelle in einfacher Art und Weise möglich, so dass eine Serienproduktion des Flächenelementes beispielsweise mit einem vollständig auf die Basiseinheit laminierten Klebeband durchgeführt werden kann und erst auf der Baustelle ein erster und ein zweiter Klebebereich hergestellt werden können. Insbesondere kann ferner das Klebeband einen abziehbaren Klebeschutz aufweisen, welcher die Klebeschicht beispielsweise beim Transport der Flächenelemente zur Baustelle schützt und zum Erzeugen der Klebewirkung mit einem weiteren Bauteil entfernt werden kann. Ferner kann durch den ersten Klebebereich eine flächige Verbindung mehrerer Flächenelemente gewährleistet werden.

Im Rahmen der Erfindung kann ferner vorgesehen sein, dass das Verbindungsmittel und/oder das Gegenverbindungsmittel durch einen elektrisch leitfähigen Klebstoff mit der Basiseinheit verklebt ist. Dadurch können gleichzeitig eine zuverlässigere Kontaktierung und Befestigung des Verbindungsmittels und/oder des Gegenverbindungsmittels gewährleistet sein. Der elektrisch leitfähige Klebstoff kann auch als Leitkleber bezeichnet werden und vorzugsweise ein Harz und/oder einen elektrische Leitfähigen Füllstoff, insbesondere Silber, aufweisen. Dadurch kann der elektrische Anschluss insbesondere unempfindlicher gegenüber Umwelteinflüssen und/oder gegenüber Fehlern bei der Montage des Flächenelementes auf der Baustelle sein. Ferner kann die Zuverlässigkeit in der Qualität bei einer automatisierten Fertigung des Flächenelementes verbessert sein.

Es ist ferner denkbar, dass bei einem erfindungsgemäßen Flächenelement zumindest eine Soll-Schnittlinie vorgesehen ist, entlang welcher ein Zuschneiden des Flächenelementes zur Anpassung an eine Geometrie des Raumes möglich ist, ohne die Funktion des ersten und/oder zweiten elektrischen Funktionsmittels vollständig zu zerstören, insbesondere wobei mehrere interne Verbindungsschnittstellen vorgesehen sind und zumindest eine interne Verbindungsschnittstelle beim Zuschneiden entlang der Soll-Schnittlinie funktionstüchtig bleibt. Dabei kann eine weitere interne Verbindungsschnittstelle gleichzeitig abtrennbar sein. Vorzugsweise kann ferner ein Teil des ersten und/oder zweiten elektrischen Funktionsmittels beim Zuschneiden entlang der Soll-Schnittlinie abtrennbar sein. Unter der Soll-Schnittlinie kann ein Bereich verstanden werden, entlang welchem eine vorteilhafte Schnittmöglichkeit geschaffen ist, so dass die Funktion des ersten und/oder zweiten elektrischen Funktionsmittels nicht vollständig zerstört wird. Insbesondere können mehrere Soll-Schnittlinien vorgesehen sein. Dadurch kann eine Flexibilität bei der Anpassung weiter vergrößert sein. Vorzugsweise können die Soll-Schnittlinien vorgezeichnet und/oder vorperforiert sein, so dass ein Monteur die Soll-Schnittlinien schnell erkennen kann. Weiterhin können sich die Soll-Schnittlinien beispielsweise aus der Anordnung der Sensorelemente des Erfassungsmittels und/oder der Widerstandselemente des Heizmittels ergeben, insbesondere wenn die Sensorelemente und/oder die Widerstandselemente in einem regelmäßigen Muster angeordnet sind.

Gemäß einem weiteren Aspekt der Erfindung ist eine Verbindungseinheit zum Herstellen einer elektrischen Verbindung einer internen Verbindungsschnittstelle eines Flächenelementes, insbesondere eines erfindungsgemäßen Flächenelementes, mit einer externen Gegenverbindungsschnittstelle beansprucht. Die Verbindungseinheit weist einen Verbindungskörper mit zumindest einem ersten Kontaktabschnitt zum Kontaktieren eines Verbindungsmittels der internen Verbindungsschnittstelle und einem zweiten Kontaktabschnitt zum Kontaktieren eines Gegenverbindungsmittels der externen Gegenverbindungsschnittstelle, und einen Befestigungskörper, durch welchen der Verbindungskörper am Flächenelement befestigbar ist, auf. Dabei weisen der erste und zweite Kontaktabschnitt des Verbindungskörpers jeweils zumindest ein erstes Kontaktelement zum Herstellen der elektrischen Verbindung für ein erstes elektrisches Funktionsmittel des Flächenelementes auf. Die ersten Kontaktelemente sind elektrisch miteinander verbunden, wobei der Befestigungskörper von einer ersten Seite des Flächenelementes und der Verbindungskörper von einer zweiten Seite des Flächenelementes am Flächenelement zur reversiblen Befestigung der Verbindungseinheit am Flächenelement anordbar ist.

Insbesondere ist durch die Verbindung der ersten Kontaktelemente die erste elektrobasierte Funktion des ersten elektrischen Funktionsmittels in einem Raum eines Gebäudes bereitstellbar. Unter der flächigen Ausgestaltung des Befestigungskörpers und des Verbindungskörpers kann verstanden werden, dass eine Dicke des Befestigungskörpers und des Verbindungskörpers gering im Vergleich zu den Abmessungen der Grundfläche des Befestigungskörpers und des Verbindungskörpers ist. Insbesondere handelt es sich bei dem Befestigungskörper und dem Verbindungskörper somit um flache Bauteile, die vorzugsweise lokale Erhöhungen aufweisen können. Durch die Verbindungseinheit wird dadurch die flächige Erstreckung des Flächenelementes nicht wesentlich beeinflusst, so dass das Flächenelement und/oder die Elektroinstallation flach im Raum, insbesondere im Fußboden, verlegt werden kann. Ferner ist durch den Verbindungskörper und den Befestigungskörper eine vorteilhafte Befestigungsmöglichkeit der Verbindungseinheit am Flächenelement gegeben, die intuitiv beim Verlegen bedient werden kann. Insbesondere stellt die Verbindungseinheit somit eine einfache Möglichkeit dar, die interne Verbindungsschnittstelle mit der externen Gegenverbindungsschnittstelle auf sichere Art und Weise zu verbinden. Vorzugsweise kann der Verbindungskörper auf einer den Kontaktabschnitten gegenüberliegenden Seite elektrisch isoliert sein. Insbesondere können die Kontaktabschnitte auf einen Grundkörper des Verbindungskörpers aufgebracht, vorzugsweise aufgeklebt, sein. Der Grundkörper kann einen Kunststoff aufweisen oder aus Kunststoff bestehen. Dadurch kann eine kostengünstige Herstellbarkeit der Verbindungseinheit bei gleichzeitiger baustellengerechter Robustheit ermöglicht sein. Weiterhin ist es denkbar, dass am Befestigungskörper und/oder am Verbindungskörper eine Klebeschicht angeordnet ist, insbesondere die sich über einen Rand des Befestigungskörpers bzw. des Verbindungskörpers erstreckt, so dass der Befestigungskörper und/oder der Verbindungskörper durch die Klebeschicht stoffschlüssig am Flächenelement befestigbar ist. Insbesondere kann eine flächige Erstreckung des Verbindungskörpers und/oder des Befestigungskörpers bei der Anordnung am Flächenelement parallel zu einer flächigen Erstreckung des Flächenelementes verlaufen. Vorzugsweise sind die ersten Kontaktelemente durch geätzte Leitungen, insbesondere in Form von Kupferbahnen, miteinander elektrisch verbunden.

Im Rahmen der Erfindung kann ferner vorgesehen sein, dass der erste und der zweite Kontaktbereich jeweils zumindest ein zweites Kontaktelement zum Herstellen einer elektrischen Verbindung mit einem zweiten elektrischen Funktionsmittel des Flächenelementes aufweist, wobei die zweiten Kontaktelemente des ersten und der zweiten Kontaktbereichs elektrisch miteinander verbunden sind. Dadurch können das erste und zweite elektrische Funktionsmittel separat voneinander über eine einzige Verbindungseinheit mit der externen Gegenverbindungsschnittstelle verbindbar sein. Ferner ist es denkbar, dass der erste und zweite Kontaktbereich jeweils weitere Kontaktelemente, insbesondere dritte und/oder vierte Kontaktelemente, aufweisen, die jeweils elektrisch miteinander verbunden sind. Dadurch können weitere separate Anschlüsse an der Verbindungsschnittstelle, beispielsweise für unterschiedliche Datenleitungen und/oder unterschiedliche Leiterbahnen, ermöglicht sein.

Ferner ist es bei einer erfindungsgemäßen Verbindungseinheit denkbar, dass der Befestigungskörper auf einer ersten Grundseite eines ersten Trägerelementes des Flächenelementes, und der Verbindungskörper auf einer zweiten Grundseite des ersten Trägerelementes des Flächenelementes anordbar ist. Dadurch kann der Verbindungskörper insbesondere direkt mit dem ersten und/oder zweiten elektrischen Funktionsmittel elektrisch verbunden werden. Ferner kann das erste Trägerelement zwischen dem Verbindungskörper und dem Befestigungskörper eingeklemmt werden und dadurch eine Befestigung der Verbindungseinheit am Flächenelement ermöglichen.

Ferner kann bei einer erfindungsgemäßen Verbindungseinheit vorgesehen sein, dass zumindest ein Magnet vorgesehen ist, durch welchen der Befestigungskörper und/oder der Verbindungskörper am Flächenelement, insbesondere am ersten Trägerelement, befestigbar ist. Durch den Magneten wird die richtige Positionierung der Verbindungseinheit am Flächenelement unterstützt. Ferner ist die Befestigung über den Magneten intuitiv bedienbar und erfordert auf der Baustelle lediglich geringe Kontrolle, ob die Befestigung korrekt ausgeführt ist. Die Magnetkraft sorgt dabei insbesondere für die richtige Positionierung des Befestigungskörpers und/oder des Verbindungskörpers zueinander und/oder zur Verbindungsschnittstelle des Flächenelementes.

Im Rahmen der Erfindung kann ferner vorgesehen sein, dass der Befestigungskörper und der Verbindungskörper miteinander magnetisch befestigbar sind, insbesondere wobei der Befestigungskörper einen Magneten aufweist und der Magnet mit dem ersten und/oder zweiten Kontaktabschnitt des Verbindungskörpers zur magnetischen Befestigung des Befestigungskörpers und des Verbindungskörpers in Wirkverbindung bringbar ist. Dadurch können der Befestigungskörper und der Verbindungskörper vorzugsweise miteinander und am Flächenelement befestigbar sein. Insbesondere weisen die Kontaktelemente ein magnetisierbares Material auf. Werden somit der Befestigungskörper und der Verbindungskörper derart angeordnet, dass das erste Trägerelement zwischen dem Befestigungskörper und dem Verbindungskörper angeordnet ist, wird das erste Trägerelement durch die Verbindungseinheit eingeklemmt. Gleichzeitig bewirken die Magneten eine Magnetkraft auf die Kontaktelement, so dass die Kontaktelemente gegen ein Verbindungsmittel, insbesondere einen elektrischen Kontakt, des Flächenelementes gepresst werden. Dadurch ergeben sich zum einen eine kraftschlüssige Befestigung der Verbindungseinheit an dem Flächenelement und zum anderen eine zuverlässige Kontaktierung.

Weiterhin ist es bei einer erfindungsgemäßen Verbindungseinheit denkbar, dass der Befestigungskörper zumindest eine Positionierhilfe aufweist, die mit einer Gegenpositionierhilfe des Verbindungskörpers und/oder einem Ausrichtmittel des Flächenelementes in Wirkverbindung bringbar ist, so dass eine Fehlstellung der Verbindungseinheit verhinderbar ist. Insbesondere kann die Positionierhilfe in Form eines Vorsprungs des Befestigungskörpers und die Gegenpositionierhilfe in Form einer Öffnung im Verbindungskörper ausgebildet sein. Das Ausrichtmittel umfasst ferner ebenfalls zumindest eine Öffnung. Vorzugsweise kann die Positionierhilfe einstückig mit dem Befestigungskörper ausgebildet sein. Ferner ist es denkbar, dass die Gegenpositioniermittel und/oder das Ausrichtmittel zumindest einen Vorsprung und das Positioniermittel zumindest eine Öffnung aufweist. Weiterhin sind weitere, insbesondere miteinander korrespondierende, Ausführungen denkbar. Dadurch kann eine Fehlstellung der Verbindungseinheit in sich selbst, d.h. des Befestigungskörpers zum Verbindungskörper, und/oder der Verbindungseinheit zum Flächenelement verhindert sein. Insbesondere können dabei offensichtliche, d.h. auffällige, Fehlstellungen zulässig sein, da diese auf der Baustelle leicht entdeckt werden können.

Gemäß einem weiteren Aspekt der Erfindung ist eine Elektroinstallation zum Bereitstellen zumindest einer ersten elektrobasierten Funktion in einem Raum eines Gebäudes beansprucht. Dabei ist zumindest ein erfindungsgemäßes Flächenelement durch eine interne Verbindungsschnittstelle des Flächenelementes mit einer externen Gegenverbindungsschnittstelle, insbesondere eines weiteren Flächenelementes, reversibel verbunden. Vorzugsweise ist die interne Verbindungsschnittstelle über eine erfindungsgemäße Verbindungseinheit mit der externen Gegenverbindungsschnittstelle reversibel elektrisch verbunden. Insbesondere sind zumindest zwei Flächenelemente reversibel miteinander elektrisch verbunden, wobei die interne Verbindungsschnittstelle Teil eines der Flächenelemente ist und die externe Gegenverbindungsschnittstelle Teil eines anderen Flächenelementes. Dadurch kann in einfacher Art und Weise eine Elektroinstallation zum Bereitstellen zumindest der ersten elektrobasierten Funktion in dem Raum des Gebäudes montiert werden. Somit bringt eine erfindungsgemäße Elektroinstallation die gleichen Vorteile mit sich, wie sie ausführlich mit Bezug auf ein erfindungsgemäßes Flächenelement beschrieben worden sind.

Gemäß einem weiteren Aspekt der Erfindung ist ein Verfahren zum Bereitstellen zumindest einer ersten elektrobasierten Funktion einer, insbesondere erfindungsgemäßen, Elektroinstallation in einem Raum eines Gebäudes beansprucht. Dabei umfasst das Verfahren folgende Schritte:
- Herstellen einer reversiblen elektrischen Verbindung eines erfindungsgemäßen Flächenelementes durch eine interne Verbindungsschnittstelle mit einer externen Gegenverbindungsschnittstelle, insbesondere über eine erfindungsgemäße Verbindungseinheit.

Insbesondere können dabei mehrere Flächenelemente reversibel miteinander verbunden werden. Somit bringt ein erfindungsgemäßes Verfahren die gleichen Vorteile mit sich, wie sie ausführlich mit Bezug auf ein erfindungsgemäßes Flächenelement und/oder eine erfindungsgemäße Elektroinstallation beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: einen schematischen Aufbau eines erfindungsgemäßen Flächenelements gemäß einem ersten Ausführungsbeispiel in schematischer geschnittener Ansicht,
- Figur 2: eine Draufsicht auf eine erste Grundseite einer Basiseinheit des erfindungsgemäßen Flächenelementes des ersten Ausführungsbeispiels,
- Figur 3: eine schematische Darstellung eines Erfassungsmittels des erfindungsgemäßen Flächenelementes des ersten Ausführungsbeispiels,
- Figur 4: eine mögliche Erfassung eines Ereignisses in zeitlicher Abfolge mit dem erfindungsgemäßen Flächenelement des ersten Ausführungsbeispiels,
- Figur 5: das erfindungsgemäße Flächenelement des ersten Ausführungsbeispiels in einer weiteren schematischen geschnittenen Ansicht,
- Figur 6: eine weitere geschnittene schematische Ansicht des erfindungsgemäßen Flächenelementes des ersten Ausführungsbeispiels im Randbereich,
- Figur 7: eine mögliche Biegung des erfindungsgemäßen Flächenelementes des ersten Ausführungsbeispiels in schematischer Ansicht,
- Figur 8: eine erfindungsgemäße Elektroinstallation gemäß einem weiteren Ausführungsbeispiel,
- Figur 9: ein Raum eines Gebäudes mit einer erfindungsgemäßen Elektroinstallation in einem weiteren Ausführungsbeispiel,
- Figur 10: eine Druckknopf-Ösen-Kombination für eine reversible elektrische Verbindung eines erfindungsgemäßen Flächenelementes in einem weiteren Ausführungsbeispiel,
- Figur 11: eine erfindungsgemäße Elektroinstallation in einem weiteren Ausführungsbeispiel,
- Figur 12: einen schematischen Aufbau eines erfindungsgemäßen Flächenelementes gemäß einem weiteren Ausführungsbeispiel in schematischer geschnittener Ansicht,
- Figur 13: eine Draufsicht auf ein Heizmittel des erfindungsgemäßen Flächenelementes gemäß Figur 12,
- Figur 14: eine schematische Darstellung eines Erfassungsmittels des erfindungsgemäßen Flächenelementes gemäß Figur 12,
- Figur 15: das erfindungsgemäße Flächenelemente gemäß Figur 12 in einer weiteren schematischen geschnittenen Ansicht,
- Figur 16a-c: das erfindungsgemäße Flächenelemente gemäß Figur 12 mit einer erfindungsgemäßen Verbindungseinheit.

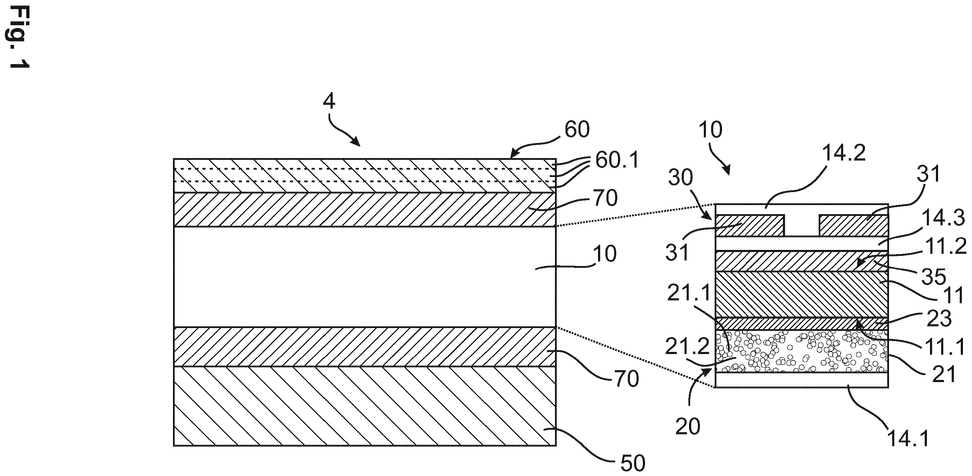

Figur 1 zeigt einen schematischen Aufbau eines erfindungsgemäßen Flächenelementes 4 für eine erfindungsgemäße Elektroinstallation 1 mit einer Detailansicht einer Basiseinheit 10 des Flächenelementes 4. Die Basiseinheit 10 bildet dabei insbesondere einen Kern des Flächenelementes 4. Die Basiseinheit 10 umfasst ein erstes Trägerelement 11, welches eine flächige Erstreckung mit einer ersten und einer zweiten Grundseite 11.1, 11.2 aufweist. Damit ist das erste Trägerelement 11 zum Verlegen des Flächenelementes 4, beispielsweise als Teil eines Begrenzungselementes 110 des Raumes 101, insbesondere eines Fußbodens, eines Gebäudes 100 geeignet. Die erste Grundseite 11.1 bildet vorzugsweise eine Unterseite des ersten Trägerelementes 11, wenn das Flächenelement 4 im Gebäude 100 als Fußbodenheizung verbaut wird. In diesem Fall bildet entsprechend vorzugsweise die zweite Grundseite 11.2 die Oberseite des ersten Trägerelementes 11. Auf der ersten Grundseite 11.1 ist ein erstes elektrisches Funktionsmittel 20 zum Ausführen einer ersten elektrobasierten Funktion vorgesehen. Bei dem ersten elektrischen Funktionsmittel handelt es sich hier um ein elektrisches Heizmittel 20, wobei die elektrobasierte Funktion eine Abgabe von Wärme umfasst. Das elektrische Heizmittel 20 weist ein Widerstandselement 21 auf, welches sich auf der ersten Grundseite 11.1 des ersten Trägerelementes 11 erstreckt und vorzugsweise flächig, insbesondere plattenartig, ausgestaltet ist. Ferner weist das elektrische Heizmittel 20 ein Heizleitelement 23 auf, durch welches das Widerstandselement 21 mit einem elektrischen Anschluss 40 des Flächenelementes 4 verbunden ist. Das Heizleitelement 23 und/oder das Widerstandselement 21 können auf das erste Trägerelement 11 aufgedruckt sein. Vorzugsweise ist dabei zunächst das Heizleitelement 23 direkt auf das erste Trägerelement 11 und das Widerstandselement 21 zumindest bereichsweise auf das Heizleitelement 23 und/oder zumindest bereichsweise auf das erste Trägerelement 11 aufgedruckt. Somit kann das Widerstandselement 21, welches vorzugsweise plattenartig ausgestaltet sein kann, sich über das Heizleitelement 23 erstrecken. Dabei kann das Heizleitelement 23 beispielsweise als schmaler Streifen vorgesehen sein, so dass das Widerstandselement 21 zum Teil auf das Heizleitelement 23 direkt aufgebracht ist und zum Teil auf das erste Trägerelement 11 direkt aufgebracht ist. Insbesondere sind das Heizleitelement 23 und das Widerstandselement 21 stoffschlüssig mit dem ersten Trägerelement 11 und/oder untereinander verbunden. Um den elektrischen Widerstand des Heizleitelementes 23 gering zu halten, weist das Heizleitelement 23 insbesondere ein Edelmetall, vorzugsweise Silber, auf. Das Widerstandselement 21 ist dazu ausgebildet, Wärme abzugeben, wenn es bestromt wird. Die abgegebene Wärme resultiert dabei insbesondere aus dem Widerstand des Widerstandselementes 21. Insbesondere weist das Widerstandselement 21 dazu eine Karbonpaste auf, welche Kohlenstoff 21.1 und/oder einen Füllstoff 21.2 aufweist. Der Kohlenstoff 21.1 kann vorzugsweise in gemahlener Form vorliegen. Der Füllstoff 21.2 dient ferner dazu, die Leitfähigkeit des Widerstandselementes 21 einzustellen, wobei die Leitfähigkeit des Widerstandselementes 21 zur Mengenzugabe des Füllstoffes 21.2 der Karbonpaste korrespondiert. Zur elektrischen Isolation zur Außenseite der Basiseinheit 10 ist ferner eine erste Schutzschicht 14.1 vorgesehen, welche das elektrische Heizmittel 20 zumindest bereichsweise überdeckt. Insbesondere kann die erste Schutzschicht 14.1 einen Lack, vorzugsweise einen Fotolack, umfassen.

Auf der zweiten Grundseite 11.2 des ersten Trägerelementes 11 weist die Basiseinheit 10 ein zweites elektrisches Funktionsmittel 30 zum Ausführen zumindest einer zweiten elektrobasierten Funktion auf. Bei dem zweiten elektrischen Funktionsmittel handelt es sich hier um ein kapazitives Erfassungsmittel 30. Die zweite elektrobasierte Funktion umfasst dabei eine Detektion eines Ereignisses 3. Das Erfassungsmittel 30 umfasst dabei eine Datenleitung 35, welche insbesondere direkt auf das erste Trägerelement 11 aufgebracht ist. Die Datenleitung 35 kann dabei zur Stromversorgung und/oder Datenkommunikation des Erfassungsmittels 30 dienen. Dazu kann die Datenleitung 35 vorzugsweise mehrere, insbesondere parallel verlaufende, Datenleiter umfassen, durch welche z.B. ein Daten-BUS bereitstellbar sein kann. Ferner umfasst das Erfassungsmittel 30 eine zwei Elektroden 31, zwischen welchen ein elektrisches Feld generierbar ist. Insbesondere können die beiden Elektroden 31 mit der Datenleitung 35 bereichsweise verbunden sein. Zur elektrischen Isolation, insbesondere weiterer Bereiche, kann ferner zwischen den Elektroden 31 und der Datenleitung 35 eine weitere Schutzschicht 14.3 vorgesehen sein. Dadurch kann sichergestellt sein, dass die Elektroden 31 und die Datenleitung 35 lediglich in einigen Kontaktabschnitten miteinander kontaktieren und somit das elektrische Feld nicht oder nur geringfügig durch die Datenleitung 35 beeinflusst wird. Zur elektrischen Isolation des Erfassungsmittels 30 gegenüber der Umwelt ist ferner eine zweite Schutzschicht 14.2 vorgesehen, welche zumindest bereichsweise das Erfassungsmittel 30 überdeckt. Vorzugsweise kann das Erfassungsmittel 30 mittelbar oder unmittelbar auf die zweite Grundseite 11.2 des ersten Trägerelementes 11 aufgebracht sein. Insbesondere können die Elektroden 31 und/oder die Datenleitung 35 durch ein Druckverfahren stoffschlüssig mit dem ersten Trägerelement 11 verbunden sein. Die zweite Schutzschicht 14.2 sowie die weitere Schutzschicht 14.3 können insbesondere lackiert sein und/oder durch ein Druckverfahren, vorzugsweise als Fotolack, aufgebracht sein.

Durch den beschriebenen Aufbau der Basiseinheit 10 ist diese flexibel, so dass sich die Handhabung des Flächenelementes 4 von der Handhabung einer starren Platte unterscheiden kann. Dies ist insbesondere bei der Handhabung auf einer Baustelle günstig, da beispielsweise eine Person die Flächenelement 4 tragen kann, das Flächenelement 4 in einem Stapel mit weiteren Flächenelementen 4 angeliefert werden kann und/oder eine Bruchgefahr des Flächenelementes 4 reduziert sein kann. Insbesondere bildet die Basiseinheit 10 einen folienartigen, vorzugsweise feuchtigkeitsundurchlässigen Verbund. Um die Basiseinheit 10 weiterhin vor Feuchtigkeit zu schützen, ist ferner insbesondere mittelbar auf der zweiten Grundseite 11.2 des ersten Trägerelementes 11 eine Abdichtungsschicht 60 an der Basiseinheit 10 angeordnet. Dazu ist eine Klebeschicht 70 zwischen der Basiseinheit 10 und der Abdichtungsschicht 60 angeordnet, um die Abdichtungsschicht 60 auf der Basiseinheit 10 zu befestigen. Ferner weist die Abdichtungsschicht 60 mehrere Faserschichten 60.1 auf, so dass eine Dichtigkeit der Abdichtungsschicht 60 durch die mehreren Faserschichten 60.1 gesteigert sein kann. Insbesondere kann die Abdichtungsschicht 60 ein Vlies aufweisen. Auf der ersten Grundseite 11.1 des ersten Trägerelementes 11 ist ferner eine Schalldämpfungsschicht 50 auf der Basiseinheit 10 befestigt. Dazu ist zwischen der Schalldämpfungsschicht 50 und der Basiseinheit 10 ferner ebenfalls eine Klebeschicht 70 vorgesehen, um eine stoffschlüssige Verbindung der Basiseinheit 10 und der Schalldämpfungsschicht 50 zu gewährleisten. Die Schalldämpfungsschicht 50 wirkt sich insbesondere bei Verwendung des Flächenelementes 4 als Fußbodenheizung positiv auf die Schallübertragung aus, so dass ein Trittschall reduziert wird. Durch die Ausbildung der Basiseinheit 10 mit dem Erfassungsmittel 30 in einem schichtartigen Verbund kann die Basiseinheit 10 zur Ausgestaltung einer Flächensensorik 1.2 flächig verlegt werden. Durch das elektrische Heizmittel 20 kann die Basiseinheit 10 zur Ausgestaltung einer Flächenheizung 1.1 flächig verlegt werden. Insbesondere ist somit eine Doppelfunktionalität des Flächenelementes 4 gegeben, so dass bei einer Verlegung des Flächenelementes 4 zum einen die Flächenheizung 1.1 ausgestaltet werden kann und zum anderen die Flächensensorik 1.2. Somit ist insbesondere lediglich eine Montage des Flächenelementes 4 notwendig, um zum einen eine Sensorfunktionalität und zum anderen eine Heizfunktionalität innerhalb eines Raumes 101 des Gebäudes 100 zu realisieren. Insbesondere umfasst die Darstellung der Figur 1 lediglich schematisch einen Bereich des Flächenelementes 4 in geschnittener Ansicht, wobei der Schichtaufbau z.B. eine Bedruckungsreihenfolge während der Herstellung des Flächenelementes 4 abbilden kann. Insbesondere können sich zumindest die Schalldämpfungsschicht 50 und/oder die Abdichtungsschicht 60 und/oder die Schutzschichten 14.1, 14.2, 14.3 vollflächig oder abschnittsweise vollflächig über die flächige Erstreckung des Flächenelementes 4 erstrecken

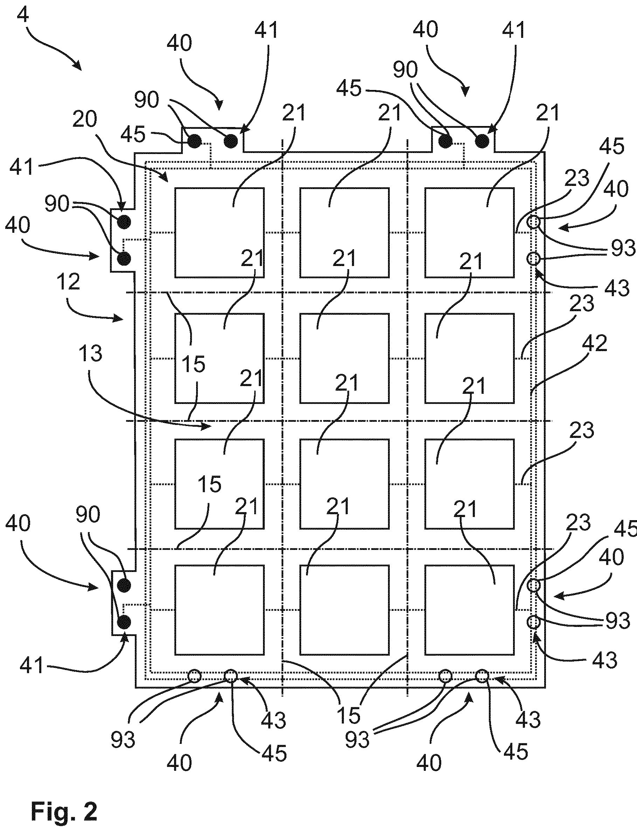

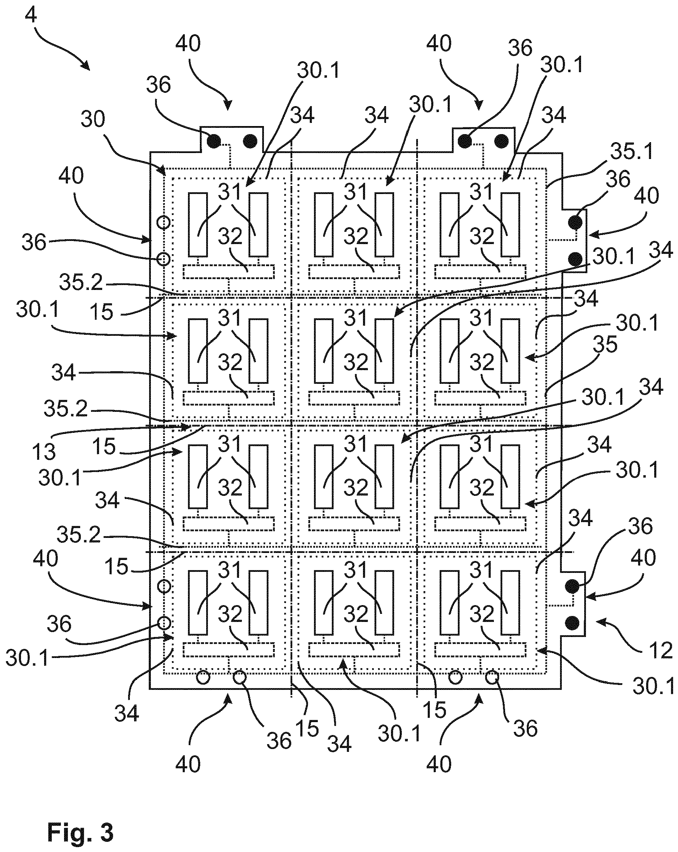

Figur 2 zeigt eine schematische Draufsicht auf die Basiseinheit 10 des Flächenelementes 4 des ersten Ausführungsbeispiels auf die erste Grundseite 11.1 des ersten Trägerelementes 11. Dabei ist gezeigt, dass das Flächenelement 4 mehrere flächig, insbesondere plattenartig, ausgestaltete Widerstandselemente 21 in einem regelmäßigen Verteilungsmuster aufweist. Die Widerstandselemente 21 sind dabei über Heizleitelemente 23 mit zumindest einer in einem Randbereich 12 der Basiseinheit 10 verlaufenden Leiterbahn 42, vorzugsweise mehreren Leiterbahnen 42, verbunden. Durch die Leiterbahn 42 sind dabei die Widerstandselemente 21 mit Heizanschlüssen 45 verbunden, welche Teil von elektrischen Anschlüssen 40 sein können, die im Randbereich 12 der Basiseinheit 10 angeordnet sind. Die Widerstandselemente 21 befinden sich in einem Mittenbereich 13 der Basiseinheit 10. Die Leiterbahn 42 ist ferner umlaufend in dem Randbereich 12 vorgesehen. Dadurch kann das Flächenelement 4 in einfacher Art und Weise an eine spezielle Geometrie eines Raumes 101, wie beispielsweise einen Erker, angepasst werden, indem ein Teilbereich der Basiseinheit 10 abgeschnitten wird. Dadurch, dass mehrere elektrische Anschlüsse 40 vorgesehen sind und die Leiterbahn 42 umlaufend ausgebildet ist, kann somit zumindest ein Teil der Funktionalität des elektrischen Heizmittels 20 erhalten bleiben, wenn einzelne Widerstandselemente 21 und/oder einzelne elektrische Anschlüsse 40 abgeschnitten werden. Für zumindest Teile der übrigen Widerstandselemente 21 bleibt vorzugsweise zumindest ein elektrischer Anschluss 40 und die entsprechende Kontaktierung über die Leiterbahn 42 erhalten. Somit sind insbesondere Soll-Schnittlinien 15 vorgesehen, entlang welcher ein Zuschneiden des Flächenelementes 4 zur Anpassung an die Geometrie des Raumes 101 möglich ist. Die Soll-Schnittlinien 15 sind dabei vorgezeichnet oder vorperforiert und/oder ergeben sich aus der Anordnung der Widerstandselemente 21 und/oder von Sensorelementen 30.1, welche in Fig. 3 dargestellt sind. Vorzugsweise ist das Flächenelement 4 als Heizmodul ausgebildet, um mit weiteren Heizmodulen zur Flächenheizung 1.1 und/oder zur Flächensensorik 1.2 verbunden zu werden. Um eine einfache Möglichkeit der elektrischen Verbindung bereitzustellen, weisen die elektrischen Anschlüsse 40 interne Verbindungsschnittstellen 41 und/oder interne Gegenverbindungsschnittstellen 43 auf. Insbesondere können die Verbindungsschnittstellen 41 mit externen Gegenverbindungsschnittstellen 43 und die internen Gegenverbindungsschnittstellen 43 mit externen Verbindungsschnittstellen 41 weiterer Flächenelemente verbindbar sein. Dazu kann jede der Verbindungsschnittstellen 41 zumindest ein, bevorzugt mehrere, Verbindungsmittel 90 aufweisen und jede der Gegenverbindungsschnittstellen 43 ein, bevorzugt mehrere, Gegenverbindungsmittel 93. Vorzugsweise kann die interne Verbindungsschnittstelle 41 und/oder die externe Gegenverbindungsschnittstelle 43 zur reversiblen mechanischen Befestigung ausgebildet sein. Insbesondere kann somit das Verbindungsmittel 90 als Druckknopf ausgebildet sein und/oder das Gegenverbindungsmittel 93 als Öse. Dadurch kann eine elektrische Verbindung des Flächenelementes 4 mit einer Energiequelle 2 und/oder einer Steuereinheit 22 schnell und zuverlässig verbindbar sein. Um die Kontakteigenschaften der elektrischen Anschlüsse 40 zu verbessern, sind die Verbindungsmittel 90 und/oder die Gegenverbindungsmittel 93 vorzugsweise mit einem elektrisch leitfähigen Klebstoff an der Basiseinheit 10 befestigt.

Insbesondere ist jedem Widerstandselement 21 des elektrischen Heizmittels 20 ein Sensorelement 30.1 zugeordnet. Dadurch kann ferner die Zuschneidbarkeit des Flächenelementes 4 weiter vereinfacht sein, so dass eine Zuschneidung entsprechend genauso viele Sensorelemente 30.1 abtrennt, wie Widerstandselemente 21. Das Erfassungsmittel 30 ist schematisch in einer Draufsicht auf die zweite Grundseite 11.2 des ersten Trägerelementes 11 in Figur 3 dargestellt. Das Erfassungsmittel 30 weist dabei die Sensorelemente 30.1 auf, welche jeweils zwei Elektroden 31 aufweisen, um ein elektrisches Feld generieren zu können. Jedes Sensorelement 30.1 ist mit einer dezentralen Auswerteeinheit 32 verbunden. Die dezentrale Auswerteeinheit 32 ist ferner in der Nähe der jeweiligen Sensorelemente 30.1 angeordnet, so dass eine Verbindungsstrecke zwischen den Sensorelementen 30.1 und der jeweiligen Auswerteeinheit 32 gering gehalten werden kann. Insbesondere ist die dezentrale Auswerteeinheit 32 dazu ausgebildet, analoge Messsignale der Sensorelemente 30.1 in digitale Signale umzuwandeln. Ferner sind die dezentralen Auswerteeinheiten 32 mit einer Datenleitung 35 verbunden. Die Datenleitung 35 weist ferner einen Versorgungsabschnitt 35.2 und einen Ringabschnitt 35.1 auf. Der Ringabschnitt 35.1 ist dabei insbesondere zumindest teilweise parallel zur Leiterbahn 42, umlaufend in dem Randbereich 12 der Basiseinheit 10 angeordnet. Der Versorgungsabschnitt 35.2 ist insbesondere parallel zum Heizleitelement 23, zumindest teilweise im Mittenbereich 13 der Basiseinheit 10 angeordnet. Somit können die Auswerteeinheiten 32 über den Versorgungsabschnitt 35.2 mit dem Ringabschnitt 35.1 verbunden sein. Vorzugsweise kann jeder Versorgungsabschnitt 35.2 den Ringabschnitt 35.1 mehrfach kontaktieren. Somit ergibt sich ebenfalls eine vorteilhafte Zuschneidbarkeit des Flächenelementes 4, so dass beispielsweise auch beim Abschneiden eines oberen Bereiches des Flächenelementes 4 die Funktionalität von verbleibenden Sensorelementen 30.1 erhalten bleiben kann. Der Ringabschnitt 35.1 ist dazu ferner mit mehreren Datenanschlüssen 36 verbunden, welche Teil der elektrischen Anschlüsse 40 für das elektrische Heizmittel 20 sein können oder separate elektrische Anschlüsse 40 bilden können. Insbesondere kann die Datenleitung 35 mehrere Datenleitungen aufweisen, welche parallel verlaufen, um beispielsweise unterschiedliche Daten übertragen zu können und/oder einen Bus zur Verfügung zu stellen. Ferner sind in gestrichelter Darstellung Erfassungsbereiche 34 des Erfassungsmittels 30 des Flächenelementes 4 dargestellt, welche durch die Sensorelemente 30.1 überwachbar sind.

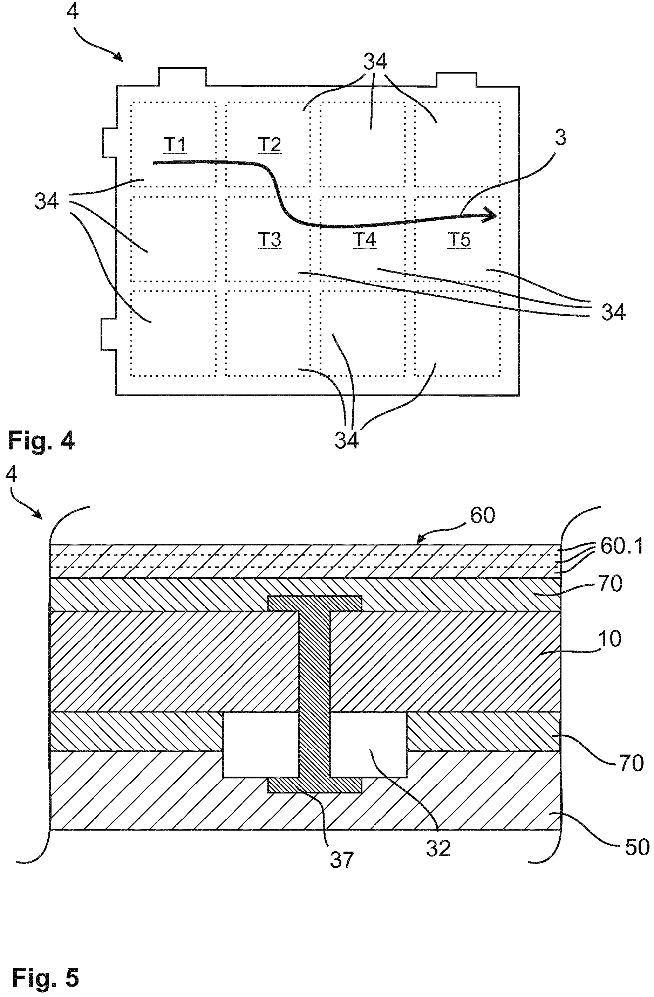

Figur 4 zeigt schematisch mehrere Erfassungsbereiche 34, welche jeweils durch die Sensorelemente 30.1 generierbar sein können. Um beispielsweise ein Verhalten einer Person oder eine Anwesenheit einer Person als Ereignis 3 detektieren zu können, kann vorgesehen sein, die Erfassungsbereiche 34 einzeln zu überwachen und insbesondere zu unterschiedlichen Zeitpunkten T1 bis T5 auszuwerten. Somit kann beispielsweise ein Ereignis 3 in Form einer Bewegung einer Person verfolgt werden, so dass sich der Einsatz der Flächensensorik 1.2 des Flächenelementes 4 insbesondere auch für gewerbliche Anwendungen derart eignet, dass Besucherströme in ihrem Verhalten analysiert werden können. Dadurch kann beispielsweise eine Erkenntnis gewonnen werden, ob ein Produkt besonders interessant auf Besucher wirkt oder dergleichen.

Figur 5 zeigt ferner eine mögliche Verbindung der dezentralen Auswerteeinheit 32 mit den Sensorelementen 30.1 des Erfassungsmittels 30. Insbesondere kann die dezentrale Auswerteeinheit 32 dabei auf der ersten Grundseite 11.1 des ersten Trägerelementes 11 vorgesehen sein, auf welche auch das elektrische Heizmittel 20 angeordnet ist. Eine Verbindung der Sensorelemente 30.1 mit der dezentralen Auswerteeinheit 32 durch das erste Trägerelement 11 hindurch kann dabei in besonders einfacher Form durch jeweils ein Durchgangselement 37 gewährleistet werden, welches insbesondere als Niet ausgestaltet sein kann. Dies kann die Serienfertigung des Flächenelementes 4 weiter begünstigen. Dabei kann gleichzeitig eine Befestigung der dezentralen Auswerteeinheit 32 mit der Basiseinheit 10 erfolgen. Insbesondere kann ferner die Auswerteeinheit 32 vorteilhafterweise in die Schalldämpfungsschicht 50 eingebettet sein, welche besonders nachgiebig ausgebildet sein kann und somit einen elastischen Schutz bei Belastung des Flächenelementes 4, beispielsweise durch die Bewegung einer Person, bieten kann.

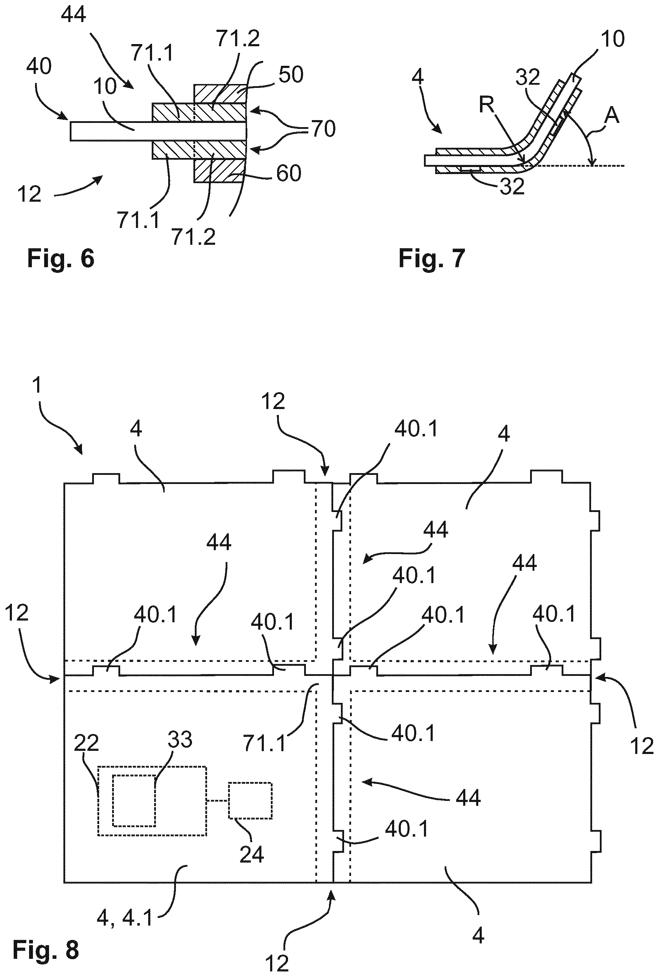

Figur 6 zeigt ferner einen Randbereich 12 des Flächenelementes 4 des ersten Ausführungsbeispiels in schematischer Darstellung. Dabei ist die Basiseinheit 10 mit einem der elektrischen Anschlüsse 40 gezeigt. Ferner ist in dem Randbereich ein Teil der Klebeschichten 70 angeordnet. Zumindest eine der Klebeschichten 70 weist dabei einen ersten Klebebereich 71.1 als Befestigungsschnittstelle 44 zum Verbinden des Flächenelementes 4 mit weiteren Flächenelementen und/oder weiteren Komponenten der Flächenheizung 1.1 auf. Ferner ist ein zweiter Klebebereich 71.2 vorgesehen, durch welchen die Basiseinheit 10 mit der Abdichtungsschicht 60 und/oder der Schalldämpfungsschicht 50 verbunden ist. Somit lassen sich in einfacher Art und Weise mehrere Funktionen durch die jeweilige Klebeschicht erfüllen.

Figur 7 zeigt das erfindungsgemäße Flächenelement 4 des ersten Ausführungsbeispiels mit einer möglichen Biegung. Dabei ist das Flächenelement 4 um einen Biegewinkel A biegbar. Dies ist insbesondere deshalb möglich, weil die Basiseinheit 10 flexibel ausgestaltet ist. Vorzugsweise kann der erreichbare Biegewinkel A größer oder gleich 10°, vorzugweise größer oder gleich 45°, besonders bevorzugt größer oder gleich 90° sein. Der erreichbare Biegewinkel kann sich insbesondere auf eine Horizontale beziehen, wenn das Flächenelement 4 zumindest bereichsweise, z.B. auf einem Fußboden, aufliegt. Dabei kann jedoch ferner ein Biegeradius R vorgesehen sein, welcher verdeutlicht, dass der Biegewinkel A von einem Knick zu unterscheiden ist. Insbesondere können ferner die dezentralen Auswerteeinheiten 32 starr ausgebildet sein, so dass eine Biegung zwischen den dezentralen Auswerteeinheiten 32 möglich ist.

Figur 8 zeigt ferner eine Verbindung mehrerer Flächenelemente 4 einer erfindungsgemäßen Elektroinstallation 1 in einem weiteren Ausführungsbeispiel. Die Flächenelemente 4 bilden dabei eine Flächenheizung 1.1 beziehungsweise eine Flächensensorik 1.2. Untereinander sind die Flächenelemente 4 durch elektrische Anschlüsse 40 verbunden, durch welche jeweils eine elektrische Verbindung 40.1 hergestellt sein kann. Die elektrische Verbindung 40.1 kann dabei eine Energieversorgung und/oder eine Datenverbindung zur Verfügung stellen. Eines der Flächenelemente 4 ist dabei vorzugsweise als Masterelement 4.1 ausgebildet, welche direkt mit der Steuereinheit 22 in Kommunikationsverbindung stehen kann. Insbesondere kann das Masterelement 4.1 einen Temperatursensor 24 zum Kalibrieren und/oder Justieren der Flächenheizung 1.1 aufweisen. Ferner ist dargestellt, dass die Flächenelemente 4 in ihren Randbereichen 12 überlappen. Insbesondere können die Randbereiche 12 jeweils erste Klebebereiche 71.1 aufweisen, welche eine Befestigungsschnittstelle 44 bilden können. Durch die Befestigungsschnittstellen 44 sind die Flächenelemente 4.1, 4.2 insbesondere untereinander befestigbar. Die Steuereinheit 22, welche mit dem Masterelement 4.1 in Verbindung steht, kann ferner ein zentrales Steuergerät 33 aufweisen, durch welches vorzugsweise eine Heizleistung der Flächenelemente 4 und eine Detektion von Ereignissen 3 der Flächenelemente 4 steuerbar bzw. auswertbar sein können. Vorzugsweise kann das zentrale Steuergerät 33 in einer Unterputzdose eines Raumes 101 eines Gebäudes 100 vorgesehen sein. Insbesondere kann eines der Flächenelemente 4 oder alle Flächenelemente 4 gemäß dem Flächenelement des ersten Ausführungsbeispiels ausgestaltet sein.

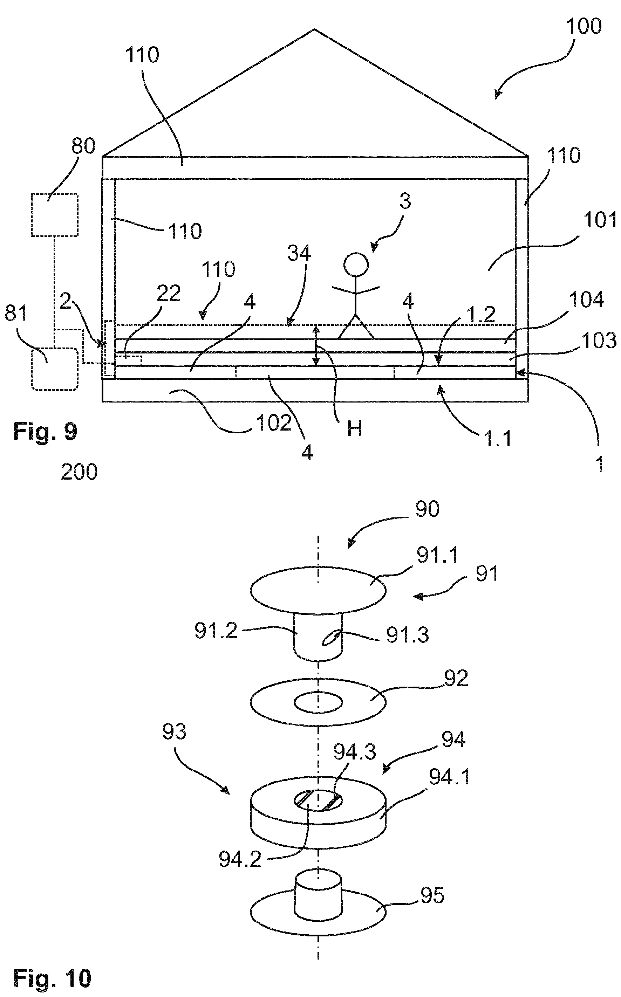

Figur 9 zeigt ferner ein Gebäude 100 mit einem Raum 101 mit einer erfindungsgemäßen Elektroinstallation 1. Die Elektroinstallation 1 umfasst eine Flächenheizung 1.1, durch welche der Raum 101 beheizbar ist, und durch eine Flächensensorik 1.2, durch welche der Raum 101 zumindest bereichsweise überwachbar ist. Das Überwachen des Raumes 101 kann dabei eine Detektion eines Ereignisses 3 umfassen, wobei das Ereignis 3 vorzugsweise eine Aktivität einer Person umfassen kann. Insbesondere kann die Aktivität der Person ein Aufenthalt der Person sein. Insbesondere kann ferner die Flächensensorik 1.2 zur kapazitiven Detektion des Ereignisses 3 ausgebildet sein. Die Flächenheizung 1.1 und die Flächensensorik 1.2 sind dabei durch erfindungsgemäße Flächenelemente 4 ausgebildet, vorzugsweise durch einen Verbund mehrerer Flächenelemente 4 gemäß des ersten Ausführungsbeispiels. Dazu sind die Flächenelemente 4 auf einem Bauelement 102 des Gebäudes 100 angeordnet. Das Bauelement 102 kann vorzugsweise ein Fußbodenrohbauteil sein. Auf den Flächenelementen 4 ist ferner ein Funktionsbelag 103, welcher vorzugsweise ein Estrich sein kann, sowie ein Sichtbelag 104, welcher beispielsweise Fliesen und/oder Teppich und/oder Laminat und/oder dergleichen umfassen kann, angeordnet. Die Flächensensorik 1.2 und/oder die Flächenheizung 1.1 können dabei mit einer externen Recheneinheit 80 und/oder einem mobilen Endgerät 81 verbunden und/oder verbindbar sein. Dadurch kann beispielsweise eine Fernsteuerung der Flächenheizung 1.1 und/oder eine Fernüberwachung der Flächensensorik 1.2 durch einen Benutzer auch außerhalb des Gebäudes 100 und/oder in einem anderen Raum des Gebäudes 100 durchgeführt werden. Insbesondere kann eines der Flächenelemente 4 oder alle Flächenelemente 4 gemäß dem Flächenelement des ersten Ausführungsbeispiels ausgestaltet sein. Vorzugsweise können Erfassungsbereiche 34 zur Detektion des Ereignisses vorgesehen sein, welche ausgehend von Sensorelementen 30.1 der Flächenelemente 4 eine Höhe H von größer oder gleich 10 mm, vorzugsweise von größer oder gleich 25mm, besonders bevorzugt von größer oder gleich 40 mm, aufweisen.

Figur 10 zeigt eine Explosionsdarstellung eines Verbindungsmittels 90 und eines Gegenverbindungsmittels 93. Dabei ist das Verbindungsmittel 90 als Rastmittel mit einem Druckknopf ausgestaltet und das Gegenverbindungsmittel 93 als Gegenrastmittel mit einer zum Druckknopf des Verbindungsmittels 90 korrespondierenden Öse. Das Verbindungsmittel 90 weist ein erstes und ein zweites Patrizenelement 91, 92 auf, welche zur Verbindung mit einer Basiseinheit 10 eines Flächenelementes 4 auf gegenüberliegenden Seiten der Basiseinheit 10 angeordnet und beispielsweise miteinander verpresst werden können. Das erste Patrizenelement 91 weist dabei einen Flansch 91.1 auf, welcher flächig auf die Basiseinheit 10 aufbringbar ist. Ferner weist das erste Patrizenelement 91 ein Steckelement 91.2 auf, welches mit zumindest einer, vorzugsweise zwei Rastkerben 91.3 in ein Aufnahmeelement 94.2 des Gegenverbindungsmittels 93 einsteckbar ist, um eine reversible Verbindung herzustellen. Das Gegenverbindungsmittel 93 weist korrespondierend zum Verbindungsmittel 90 ein erstes Matrizenelement 94 und ein zweites Matrizenelement 95 auf. Dabei ist das erste Matrizenelement 94 beispielsweise auf einer ersten Grundseite 11.1 der Basiseinheit 10 anordbar und das zweite Matrizenelement 95 auf einer zweiten Grundseite 11.2 der Basiseinheit 10. Dazu weist das erste Matrizenelement 94 ein Kopfelement 94.1 auf, welches bei der reversiblen elektrischen Verbindung mit dem zweiten Patrizenelement 92 aufliegt. Das Aufnahmeelement 94.2 weist ferner zumindest ein, vorzugsweise zwei Federelemente 94.3 auf, welche mit der oder den Rastkerben 91.3 des ersten Patrizenelementes 91 zusammenwirken, um eine form- und/oder kraftschlüssige Verbindung zu gewährleisten. Insbesondere weisen das Verbindungsmittel 90 und das Gegenverbindungsmittel 93 jeweils ein elektrisch leitfähiges Material auf, so dass durch die Patrizenelemente 91, 92 sowie die Matrizenelemente 94, 95 selbst eine elektrische Verbindung 40.1 gewährleistbar ist.

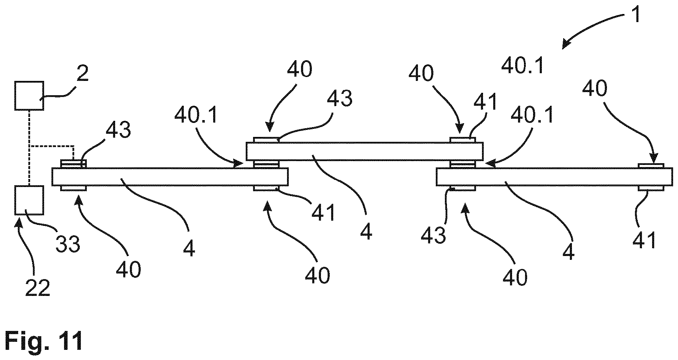

Figur 11 zeigt ferner eine erfindungsgemäße Elektroinstallation 1 in einem weiteren Ausführungsbeispiel, bei welcher mehrere Flächenelemente 4 jeweils zumindest zwei Anschlüsse 40 aufweisen, über welche die Flächenelemente 4 miteinander verbunden sind. Dabei weist zumindest ein Anschluss 40 der Flächenelemente 4 jeweils eine interne Verbindungsschnittstelle 41 und eine interne Gegenverbindungsschnittstelle 43 auf. Jeweils eine Verbindungsschnittstelle 41 eines Flächenelementes 4 ist dabei mit jeweils einer Gegenverbindungsschnittstelle 43 eines weiteren Flächenelementes 4, welche eine externe Gegenverbindungsschnittstelle 43 für das zuvor genannte Flächenelement 4 ist, reversibel verbunden. Dazu weisen die Verbindungsschnittstellen 41 ein Verbindungsmittel 90 gemäß Figur 10 auf und die Gegenverbindungsschnittstellen ein Gegenverbindungsmittel 93 gemäß Figur 10. Dadurch ist in einfacher Art und Weise eine elektrische Verbindung der Flächenelemente 4 untereinander ermöglicht, so dass die Elektroinstallation 1 in einfacher Art und Weise montiert werden kann.

Ferner ist ein Flächenelement 4 (in der Zeichnung links) über einen der elektrischen Anschlüsse 40 reversibel mit einer Steuereinheit 22, insbesondere mit einer Energiequelle 2 und/oder einem zentralen Steuergerät 33, verbunden.

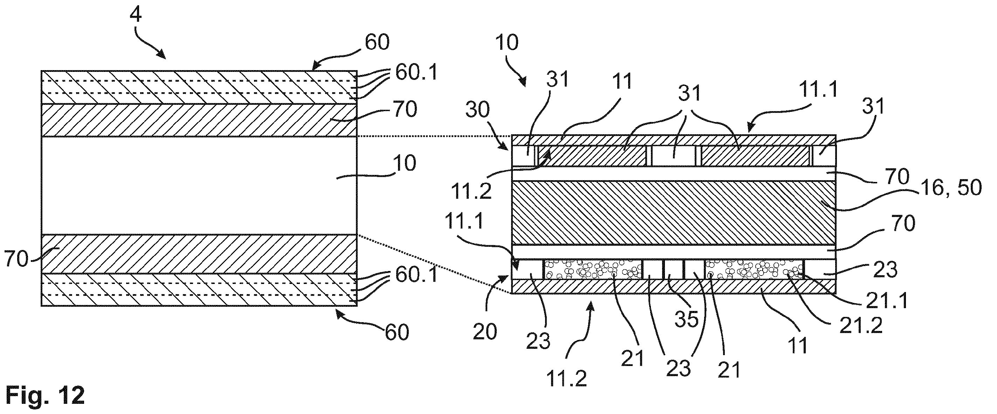

Figur 12 zeigt einen schematischen Aufbau eines erfindungsgemäßen Flächenelementes 4 mit einer Detailansicht einer Basiseinheit 10 des Flächenelementes 4. Die Basiseinheit 10 bildet dabei insbesondere einen Kern des Flächenelementes 4 mit einer quadratischen Grundfläche. Die Basiseinheit 10 umfasst ein erstes und ein zweites Trägerelement 11, welche jeweils eine flächige Erstreckung mit einer ersten und einer zweiten Grundseite 11.1, 11.2 aufweisen. Vorzugsweise ist an der Basiseinheit 10 zumindest eine Abdichtungsschicht 60 angeordnet, insbesondere durch eine Klebeschicht 70 befestigt. Dabei kann die Abdichtungsschicht 60 mit der Klebeschicht 70 am ersten und/oder zweiten Trägerelement 11 angeordnet sein. Zusätzlich oder alternativ kann eine Schalldämpfungsschicht 50, wie im ersten Ausführungsbeispiel dargestellt, an der Basiseinheit 10 angeordnet sein. Damit sind das erste und zweite Trägerelement 11 zum Verlegen des Flächenelementes 4, beispielsweise als Teil eines Begrenzungselementes 110 des Raumes 101, insbesondere eines Fußbodens, eines Gebäudes 100 geeignet. Dabei wird insbesondere auf die Darstellung in Figur 9 Bezug genommen. Die erste Grundseite 11.1 des ersten Trägerelementes 11 bildet vorzugsweise eine Oberseite des ersten Trägerelementes 11, wenn das Flächenelement 4 im Gebäude 100 als Fußbodenheizung verbaut wird. In diesem Fall bildet entsprechend die zweite Grundseite 11.2 des ersten Trägerelementes 11 die Unterseite des ersten Trägerelementes 11 und/oder der Basiseinheit 10. Auf der ersten Grundseite 11.1 des ersten Trägerelementes 11 ist ein erstes elektrisches Funktionsmittel 20 in Form eines elektrischen Heizmittels 20 elektrischen Erzeugung und Abgabe von Wärme vorgesehen. Die erste Grundseite 11.1 des zweiten Trägerelementes 11 bildet vorzugsweise eine Oberseite des zweiten Trägerelementes 11 und/oder der Basiseinheit 10, wenn das Flächenelement 4 im Gebäude 100 als Fußbodenheizung verbaut wird. In diesem Fall bildet entsprechend vorzugsweise die zweite Grundseite 11.2 die Unterseite des zweiten Trägerelementes 11. Damit sind die erste Grundseite 11.1 des ersten Trägerelementes 11 und die zweite Grundseite 11.2 des zweiten Trägerelementes 11 einander zugewandt. Auf der zweiten Grundseite 11.2 des zweiten Trägerelementes 11 ist ein zweites elektrisches Funktionsmittel 30 in Form eines Erfassungsmittels 30 zur kapazitiven Detektion eines Ereignisses 3 vorgesehen. Das Heizmittel 20 und das Erfassungsmittel 30 sind somit zwischen dem ersten und zweiten Trägerelement 11 angeordnet und damit zumindest teilweise geschützt. Zwischen dem ersten und zweiten Trägerelement 11 ist ferner ein Zwischenelement 16 angeordnet, das vorzugsweise als Schalldämpfungsschicht 50 ausgebildet ist. Damit ist durch das Zwischenelement 16 ein räumlicher Abstand und/oder eine elektrische Isolation zwischen dem ersten und zweiten Trägerelement 11 gewährleistet. Gleichzeitig kann ein Trittschall durch das Zwischenelement 16 reduziert sein.

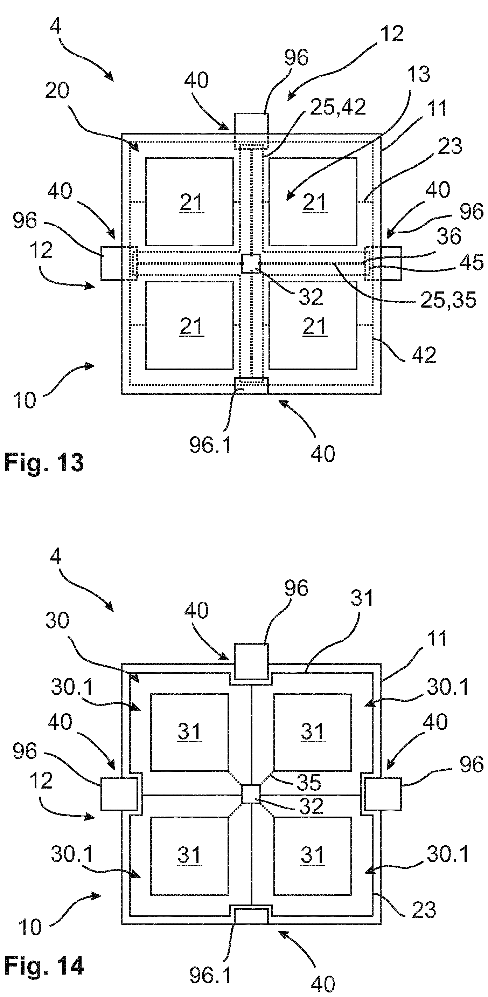

Figur 13 zeigt eine Draufsicht auf das erste Trägerelement 11 der Basiseinheit 10 mit dem elektrischen Heizmittel 20. Das elektrische Heizmittel 20 weist zumindest ein Widerstandselement 21 auf, welches sich auf der ersten Grundseite 11.1 des ersten Trägerelementes 11 erstreckt und vorzugsweise flächig, insbesondere plattenartig, ausgestaltet ist. Ferner weist das elektrische Heizmittel 20 zumindest zwei Leiterbahnen 42 auf, durch welche das Widerstandselement 21 mit einem elektrischen Anschluss 40 des Flächenelementes 4 verbunden ist. Die Leiterbahnen 42 und/oder das Widerstandselement 21 können auf das erste Trägerelement 11 aufgedruckt sein. Vorzugsweise sind dabei zunächst die Leiterbahnen 42 direkt auf das erste Trägerelement 11 und das Widerstandselement 21 zumindest bereichsweise auf mit den Leiterbahnen 42 verbundene Heizleitelemente 23 und/oder zumindest bereichsweise auf das erste Trägerelement 11 aufgedruckt. Insbesondere sind die Leiterbahnen 42, die Heizleitelemente 23 und das Widerstandselement 21 stoffschlüssig mit dem ersten Trägerelement 11 und/oder untereinander verbunden. Um den elektrischen Widerstand der Heizleitelemente 23 und der Leiterbahnen 42 gering zu halten, weisen die Heizleitelemente 23 und die Leiterbahnen 42 insbesondere ein Edelmetall, vorzugsweise Silber, auf. Das Widerstandselement 21 ist dazu ausgebildet, Wärme abzugeben, wenn es bestromt wird. Die abgegebene Wärme resultiert dabei insbesondere aus dem Widerstand des Widerstandselementes 21. Insbesondere weist das Widerstandselement 21 dazu eine Karbonpaste auf, welche Kohlenstoff 21.1 und/oder einen Füllstoff 21.2 aufweist. Zur elektrischen Isolation des Heizmittels 20 kann ferner, wie im ersten Ausführungsbeispiel, eine erste Schutzschicht 14.1 vorgesehen sein, welche das elektrische Heizmittel 20 zumindest bereichsweise überdeckt. Insbesondere weist das Heizmittel 20 mehrere Widerstandselemente 21 in einem regelmäßigen Muster auf. Eine der Leiterbahnen 42 ist als kreuzartig umlaufender Anschlussabschnitt 25 ausgebildet. Dadurch können elektrische Anschlüsse 40, die in einem Randbereich 12 der Basiseinheit 10 angeordnet sind auch dann noch zur Energieversorgung eines der Widerstandselemente 21 eingesetzt werden, wenn das Flächenelement 4 zur Anpassung an eine Geometrie des Raumes 101 zugeschnitten wird. Eine der Leiterbahnen 42 weist ferner einen in einem Randbereich 12 der Basiseinheit 10 umlaufend verlaufenden Abschnitt auf, durch welchen die Zuschneidbarkeit des Flächenelementes 4 verbessert ist.

Das Erfassungsmittel 30 kann vorzugsweise zur kapazitiven Detektion des Ereignisses 3 ausgebildet sein. Die Basiseinheit 10 umfasst dabei zumindest eine Datenleitung 35, welche insbesondere direkt auf das erste und/oder zweite Trägerelement 11 aufgebracht ist. Gemäß Figur 13 umfasst die Datenleitung 35 dabei Anschlussabschnitte 25, die sich kreuzartig von einer mittig an der Basiseinheit 10 angeordneten dezentralen Auswerteeinheit 32 zu den elektrischen Anschlüssen 40 erstrecken. Die Datenleitung 35 kann dabei zur Stromversorgung und/oder Datenkommunikation des Erfassungsmittels 30 dienen. Dazu kann die Datenleitung 35 vorzugsweise mehrere, insbesondere parallel verlaufende, Datenleiter umfassen, durch welche z.B. ein Daten-BUS bereitstellbar sein kann. Figur 14 zeigt eine Draufsicht auf das zweite Trägerelement 11 der Basiseinheit 10 mit dem Erfassungsmittel 30. Ferner umfasst das Erfassungsmittel 30 zwei Elektroden 31, durch welche gemeinsam ein elektrisches Feld generierbar ist. Eine der Elektroden 31 ist als Schirmelektrode zur Begrenzung des elektrischen Feldes und im Randbereich 12 der Basiseinheit 10 umlaufend ausgebildet. Zur elektrischen Isolation des Erfassungsmittels 30 gegenüber der Umwelt kann ferner eine zweite Schutzschicht 14.2, wie im Ausführungsbeispiel gemäß Figur 1 dargestellt, vorgesehen sein, wobei die zweite Schutzschicht 14.2 vorzugsweise zumindest bereichsweise das Erfassungsmittel 30 überdeckt. Insbesondere ist das Erfassungsmittel 30 mittelbar oder unmittelbar auf die zweite Grundseite 11.2 des zweiten Trägerelementes 11 aufgebracht. Ferner können die Elektroden 31 und/oder die Datenleitung 35 durch ein Druckverfahren stoffschlüssig mit dem zweiten Trägerelement 11 verbunden sein. Das Erfassungsmittel 30 weist für die Detektion des Ereignisses 3 vier Sensorelemente 30.1 auf, welche jeweils durch eine Elektrode 31 und die umlaufende Elektrode 31 in Form der Schirmelektrode gebildet sind. Dadurch sind insbesondere vier Erfassungsbereiche 34 zur Detektion des Ereignisses 3 geschaffen.

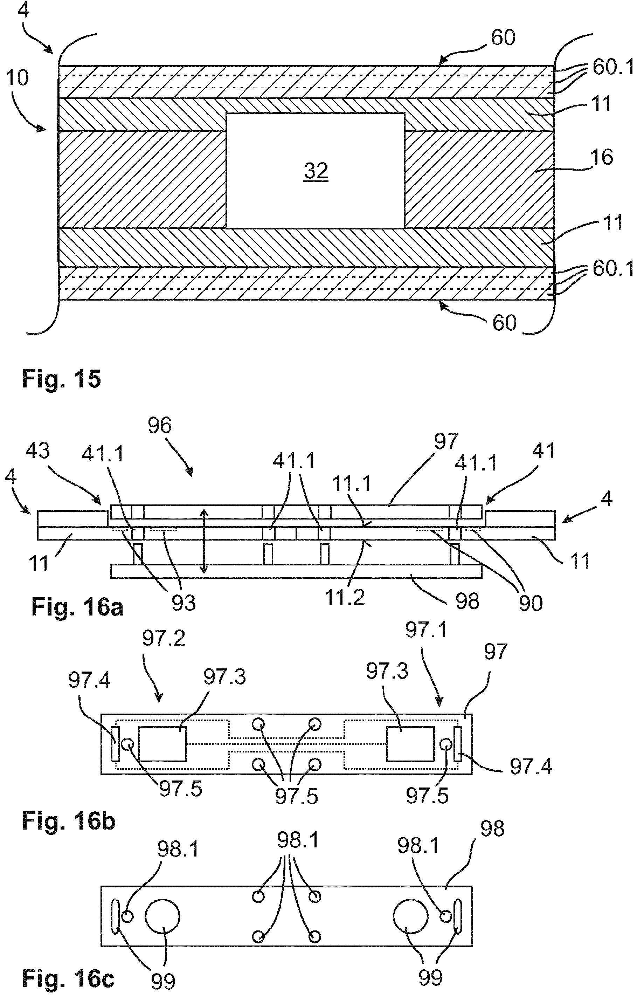

Die dezentrale Auswerteeinheit 32 ist mit jedem der Sensorelemente 30.1 des Flächenelementes 4 verbunden. Die dezentrale Auswerteeinheit 32 ist durch die mittige Anordnung ferner in der Nähe der jeweiligen Sensorelemente 30.1 angeordnet, so dass eine Verbindungsstrecke zwischen den Sensorelementen 30.1 und der jeweiligen Auswerteeinheit 32 gering gehalten werden kann. Insbesondere ist die dezentrale Auswerteeinheit 32 dazu ausgebildet, analoge Messsignale der Sensorelemente 30.1 in digitale Signale umzuwandeln. Weiterhin kann eine Vorauswertung der Messsignale durch die dezentrale Auswerteeinheit 32 durchgeführt werden. Figur 15 zeigt ferner die Anordnung der dezentralen Auswerteeinheit 32 in der Basiseinheit 10 in geschnittener Ansicht. Die dezentrale Auswerteinheit 32 erstreckt sich zumindest teilweise in eine Aufnahmeöffnung des Zwischenelementes 16. Dadurch ist durch die dezentrale Auswerteinheit 32 auch eine elektrische Verbindung zwischen Komponenten des ersten und zweiten Trägerelementes 11 ermöglicht. Insbesondere können dadurch die Anschlussabschnitte 25 der Datenleitung 35 über die dezentrale Auswerteinheit 32 mit dem Erfassungsmittel 30 verbunden sein.

Die elektrischen Anschlüsse 40 weisen, wie in Figur 16a dargestellt, jeweils eine interne Verbindungsschnittstelle 41 zum Verbinden des elektrischen Heizmittels 20 und des Erfassungsmittels 30 mit einer erfindungsgemäßen Verbindungseinheit 96 auf. Durch die Verbindungseinheit 96 kann eine elektrische Verbindung der internen Verbindungsschnittstelle 41 mit einer externen Gegenverbindungsschnittstelle 43 gewährleistet werden, so dass über den elektrischen Anschluss 40 zumindest mittelbar ein Anschluss des Flächenelementes 4 an eine Energiequelle 2 und/oder eine Steuereinheit 22 möglich ist. Insbesondere kann das Flächenelement 4 zum Anschluss an die Energiequelle 2 und/oder die Steuereinheit 22 mit einer weiteren Flächenelementen 4 und/oder ein Netzwerk aus weiteren Flächenelementen 4 verbunden sein. Dementsprechend kann die externe Gegenverbindungsschnittstelle 43 Teil des weiteren Flächenelementes 4 sein. Nicht benötigte elektrische Anschlüsse 40 können vorzugsweise durch ein Blindstück 96.1 verschließbar sein. Die Verbindungseinheit 96 weist ferner einen flächigen Verbindungskörper 97, wie in Figur 16b dargestellt, und einen flächigen Befestigungskörper 98, wie in Figur 16c dargestellt, auf. Für die elektrische Verbindung der internen Verbindungsschnittstelle 41 und der externen Gegenverbindungsschnittstelle 43 kann der Verbindungskörper 97 in einer Ausnehmung 46 der Basiseinheit 10 des Flächenelementes 4 angeordnet werden. Dabei weist der Verbindungskörper 97 einen ersten und einen zweiten Kontaktabschnitt 97.1, 97.2 auf, die miteinander elektrisch verbunden sind. Um eine separate Kontaktierung des Erfassungsmittels 30 und des Heizmittels 20 zu gewährleisten, weisen der erste und zweite Kontaktabschnitt 97.1, 97.2 jeweils zumindest ein erstes Kontaktelement 97.3 und ein zweites Kontaktelement 97.4 auf, wobei die ersten Kontaktelemente 97.3 und zweiten Kontaktelemente 97.4 jeweils separat miteinander verbunden sind. Die interne Verbindungsschnittstelle 41 weist ferner zwei Verbindungsmittel 90 in Form elektrischer Kontakte auf der ersten Grundseite 11.1 des ersten Trägerelementes 11 auf. Die externe Gegenverbindungsschnittstelle 43 weist zwei analog ausgestaltete Gegenverbindungsmittel 93 in Form elektrischer Kontakte auf. Somit können durch die Verbindungseinheit 96 zwei gleichartige Schnittstellen 41, 43 in einfacher Art und Weise baustellengerecht verbunden werden. Um die Befestigung der Verbindungseinheit 96 zu vereinfachen ist ferner der Befestigungskörper 98 vorgesehen. Dieser kann auf einer dem Verbindungskörper 97 gegenüberliegenden Seite des ersten Trägerelementes 11 angeordnet werden. Ferner umfasst der Befestigungskörper 98 Magneten 99, die mit den Kontaktelementen 97.3 in Wirkverbindung bringbar sind. Insbesondere sind die Kontaktelemente 97.3 dazu magnetisierbar. Werden somit der Befestigungskörper 98 und der Verbindungskörper 97 derart angeordnet, dass das erste Trägerelement 11 zwischen dem Befestigungskörper 98 und dem Verbindungskörper 97 angeordnet ist, wird das erste Trägerelement 11 durch die Verbindungseinheit 96 eingeklemmt. Gleichzeitig bewirken die Magneten 99 eine Magnetkraft auf die Kontaktelemente 97.3, so dass die Kontaktelemente 97.3 gegen die Verbindungsmittel 90 bzw. die Gegenverbindungsmittel 93 gepresst werden. Dadurch ergibt sich zum einen eine kraftschlüssige Befestigung der Verbindungseinheit 96 an des Flächenelementes 4 und zum anderen eine zuverlässige Kontaktierung. Für eine formschlüssige Verbindung und eine korrekte Positionierung der Verbindungseinheit 96 weist der Befestigungskörper 98 ferner zumindest eine Positionierhilfe 98.1 in Form von Vorsprüngen, der Verbindungskörper 97 zumindest eine Gegenpositionierhilfe 97.5 und die interne Verbindungsschnittstelle 41 zumindest ein Ausrichtmittel 41.1 auf. Bei der Befestigung der Verbindungseinheit 96 an der internen Verbindungsschnittstelle 41 wirkt die Positionierhilfe 98.1 mit der Gegenpositionierhilfe 97.5 und dem Ausrichtmittel 41.1, so dass eine formschlüssige Verbindung entsteht. Weiterhin wird durch die geschickte Anordnung und Ausgestaltung der Positionierhilfe 98.1, der Gegenpositionierhilfe 97.5 und des Ausrichtmittels 41.1 eine Fehlpositionierung der Verbindungseinheit 96 verhindert.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1.1: Flächenheizung
- 1.2: Flächensensorik
- 2: Energiequelle
- 3: Ereignis
- 4: Flächenelement
- 4.1: Masterelement

- 10: Basiseinheit
- 11: Trägerelement
- 11.1: erste Grundseite
- 11.2: zweite Grundseite
- 12: Randbereich
- 13: Mittenbereich
- 14.1: erste Schutzschicht
- 14.2: zweite Schutzschicht
- 14.3: weitere Schutzschicht
- 15: Soll-Schnittlinie
- 16: Zwischenelement

- 20: elektrisches Heizmittel
- 20.1: Sensormaterial
- 21: Widerstandselement
- 21.1: Kohlenstoff
- 21.2: Füllstoff
- 22: Steuereinheit
- 23: Heizleitelement
- 24: Temperatursensor
- 25: Anschlussabschnitt

- 30: Erfassungsmittel
- 30.1: Sensorelement
- 31: Elektrode
- 32: dezentrale Auswerteeinheit
- 33: zentrales Steuergerät
- 34: Erfassungsbereich
- 35: Datenleitung
- 35.1: Ringabschnitt
- 35.2: Versorgungsabschnitt
- 36: Datenanschluss
- 37: Durchgangselement

- 40: elektrischer Anschluss
- 40.1: elektrische Verbindung
- 41: Verbindungsschnittstelle
- 41.1: Ausrichtmittel
- 42: Leiterbahn
- 43: Gegenverbindungsschnittstelle
- 44: Befestigungsschnittstelle
- 45: Heizanschluss
- 46: Ausnehmung

- 50: Schalldämpfungsschicht
- 60: Abdichtungsschicht
- 60.1: Faserschicht

- 70: Klebeschicht
- 71: Klebeband
- 71.1: erster Klebebereich
- 71.2: zweiter Klebebereich

- 80: externe Recheneinheit
- 81: mobiles Endgerät

- 90: Verbindungsmittel
- 91: erstes Patrizenelement
- 91.1: Flansch
- 91.2: Steckelement
- 91.3: Rastkerbe
- 92: zweites Patrizenelement
- 93: Gegenverbindungsmittel
- 94: erstes Matrizenelement
- 94.1: Kopfelement
- 94.2: Aufnahmeelement
- 94.3: Federelement
- 95: zweites Matrizenelement
- 96: Verbindungseinheit
- 97: Verbindungskörper
- 97.1: erster Kontaktabschnitt
- 97.2: zweiter Kontaktabschnitt
- 97.3: erstes Kontaktelement
- 97.4: zweites Kontaktelement
- 97.5: Gegenpositionierhilfe
- 98: Befestigungskörper
- 99: Magnet

- 100: Gebäude
- 101: Raum
- 102: Bauelement
- 103: Funktionsbelag
- 104: Sichtbelag
- 110: Begrenzungselement

- A: Biegewinkel
- R: Biegeradius
- T1-Tn: Zeitpunkte

## Patentansprüche

1. Verbindungseinheit (96) zum Herstellen einer elektrischen Verbindung einer internen Verbindungsschnittstelle (41) eines Flächenelementes (4) mit einer externen Gegenverbindungsschnittstelle (43) aufweisend
einen flächigen Verbindungskörper (97) mit zumindest einem ersten Kontaktabschnitt (97.1) zum Kontaktieren eines Verbindungsmittels (90) der internen Verbindungsschnittstelle (41) und einem zweiten Kontaktabschnitt (97.2) zum Kontaktieren eines Gegenverbindungsmittels (93) der externen Gegenverbindungsschnittstelle (43), und
einen flächigen Befestigungskörper (98), durch welchen der Verbindungskörper (97) am Flächenelement (4) befestigbar ist,
wobei der erste und zweite Kontaktabschnitt (97.1, 97.2) des Verbindungskörpers (97) jeweils zumindest ein erstes Kontaktelement (97.3) zum Herstellen der elektrischen Verbindung für ein erstes elektrisches Funktionsmittel (20, 30) des Flächenelementes (4) aufweisen und die ersten Kontaktelemente (97.3) elektrisch miteinander verbunden sind, wobei der Befestigungskörper (98) von einer ersten Seite des Flächenelementes (4) und der Verbindungskörper (97) von einer zweiten Seite des Flächenelementes (4) am Flächenelement (4) zur reversiblen Befestigung der Verbindungseinheit (96) am Flächenelement (4) anordbar ist.

2. Verbindungseinheit (96) nach Anspruch 1,
**dadurch gekennzeichnet,**
**dass** der erste und der zweite Kontaktbereich (97.1, 97.2) jeweils zumindest ein zweites Kontaktelement (97.4) zum Herstellen einer elektrischen Verbindung mit einem zweiten elektrischen Funktionsmittel (30) des Flächenelementes (4) aufweist, wobei die zweiten Kontaktelemente (97.4) des ersten und der zweiten Kontaktbereiches (97.1, 97.2) elektrisch miteinander verbunden sind, und/oder dass der Befestigungskörper (98) auf einer ersten Grundseite (11.1) eines ersten Trägerelementes (11) des Flächenelementes (4) und der Verbindungskörper (97) auf einer zweiten Grundseite (11.2) des ersten Trägerelementes (11) des Flächenelementes (4) anordbar ist, und/oder dass zumindest ein Magnet (99) vorgesehen ist, durch welchen der Befestigungskörper (98) und/oder der Verbindungskörper (97) am Flächenelement (4), insbesondere am ersten Trägerelement (11), befestigbar ist.

3. Verbindungseinheit (96) nach einem der vorhergehenden Ansprüche,
**dadurch gekennzeichnet,**
**dass** der Befestigungskörper (98) und der Verbindungskörper (97) miteinander magnetisch befestigbar sind, insbesondere wobei der Befestigungskörper (98) einen Magneten (99) aufweist und der Magnet (99) mit dem ersten und/oder zweiten Kontaktabschnitt (97.1, 97.2) des Verbindungskörpers (97) zur magnetischen Befestigung des Befestigungskörpers (98) und des Verbindungskörper (97) in Wirkverbindung bringbar ist.

4. Verbindungseinheit (96) nach einem der vorhergehenden Ansprüche,
**dadurch gekennzeichnet,**
**dass** der Befestigungskörper (98) zumindest eine Positionierhilfe (98.1) aufweist, die mit einer Gegenpositionierhilfe (97.5) des Verbindungskörpers (97) und/oder einem Ausrichtmittel (41.1) des Flächenelementes (4) in Wirkverbindung bringbar ist, so dass eine Fehlstellung der Verbindungseinheit (96) verhinderbar ist.

5. Flächenelement (4) zum Bereitstellen zumindest einer ersten elektrobasierten Funktion in einem Raum (101) eines Gebäudes (100) aufweisend
eine flexible, flächig verlegbare Basiseinheit (10) mit zumindest einem ersten elektrischen Funktionsmittel (20, 30) zum Ausführen zumindest der ersten elektrobasierten Funktion, wobei das erste elektrische Funktionsmittel (20, 30) mit einem elektrischen Anschluss (40) verbunden ist und der elektrische Anschluss (40) eine interne Verbindungsschnittstelle (41) zum Herstellen einer reversiblen elektrischen Verbindung (40.1) mit einer externen Gegenverbindungsschnittstelle (43) aufweist, wobei die Verbindungsschnittstelle (41) zum Verbinden des ersten elektrischen Funktionsmittels (20) mit einer Verbindungseinheit (96) nach einem der vorhergehenden Ansprüche ausgebildet ist.

6. Flächenelement (4) nach Anspruch 5,
**dadurch gekennzeichnet,**
**dass** der elektrische Anschluss (40) in einem Randbereich (12) der Basiseinheit (10) angeordnet ist, wobei das erste elektrische Funktionsmittel (20, 30) durch zumindest eine Leiterbahn (42) mit dem elektrischen Anschluss (40) verbunden ist, und/oder dass die Basiseinheit (10) ein erstes Trägerelement (11) aufweist, auf welchem das erste elektrische Funktionsmittel (20, 30), insbesondere in einem Mittenbereich (13) der Basiseinheit (10), angeordnet ist.

7. Flächenelement (4) nach einem der vorhergehenden Ansprüche,
**dadurch gekennzeichnet,**
**dass** die Basiseinheit (10) ein zweites elektrisches Funktionsmittel (30) zum Ausführen einer zweiten elektrobasierten Funktion aufweist, insbesondere wobei das zweite elektrische Funktionsmittel (30) zum Ausführen der zweiten elektrobasierten Funktion mit dem elektrischen Anschluss (40) oder einem weiteren elektrischen Anschluss (40) verbunden ist und/oder wobei die Basiseinheit (10) ein zweites Trägerelement (11) aufweist, auf welchem das zweite elektrische Funktionsmittel (30) angeordnet ist, und das zweite Trägerelement (11) zum ersten Trägerelement (11) beabstandet ist.

8. Flächenelement (4) nach einem der vorhergehenden Ansprüche,
**dadurch gekennzeichnet,**
**dass** die Verbindungsschnittstelle (41) zum Verbinden des zweiten elektrischen Funktionsmittels (30) mit der Verbindungseinheit (96) ausgebildet ist.

9. Flächenelement (4) nach Anspruch 8,
**dadurch gekennzeichnet,**
**dass** die Verbindungsschnittstelle (41) zumindest ein Ausrichtmittel (41.1) umfasst, welches mit einer Positionierhilfe (98.1) der Verbindungseinheit (96) in Wirkverbindung bringbar ist, so dass eine Fehlstellung der Verbindungseinheit (96) verhinderbar ist, insbesondere wobei das Ausrichtmittel (41.1) mehrere, vorzugsweise drei, Öffnungen im ersten und/oder zweiten Trägerelement (11) umfasst, durch welche Vorsprünge der Positionierhilfe (98.1) zumindest teilweise hindurchsteckbar sind, und/oder
**dass** die Verbindungsschnittstelle (41) zumindest eine Ausnehmung (46) der Basiseinheit (10) umfasst, in welche die Verbindungseinheit (96) zumindest teilweise einbringbar ist, insbesondere wobei die Ausnehmung (46) zumindest teilweise durch das erste und/oder zweite Trägerelement (11) begrenzt ist.

10. Flächenelement (4) nach einem der vorhergehenden Ansprüche,
**dadurch gekennzeichnet,**
**dass** die Verbindungsschnittstelle (41) zumindest ein Verbindungsmittel (90) mit einem elektrischen Kontakt zum elektrischen Verbinden des ersten elektrischen Funktionsmittels (20) mit einem ersten Kontaktelement (97.3) eines ersten Kontaktabschnitts (97.1) der Verbindungseinheit (96) und/oder einem elektrischen Kontakt zum elektrischen Verbinden des zweiten elektrischen Funktionsmittels (30) mit einem zweiten Kontaktelement (97.4) eines ersten Kontaktabschnitts (97.1) der Verbindungseinheit (96) aufweist.

11. Flächenelement (4) nach einem der vorhergehenden Ansprüche,
**dadurch gekennzeichnet,**
**dass** das erste und/oder zweite elektrische Funktionsmittel (20) ein elektrisches Heizmittel (20) zum Heizen des Raumes (101) umfasst, und/oder dass das erste und/oder zweite elektrische Funktionsmittel (30) ein Erfassungsmittel (30) zum Detektieren eines Ereignisses (3) im Raum (101) umfasst.

12. Flächenelement (4) nach einem der vorhergehenden Ansprüche,
**dadurch gekennzeichnet,**
**dass** an der Basiseinheit (10), insbesondere in einem Randbereich (12) der Basiseinheit (10), eine Befestigungsschnittstelle (44) angeordnet ist, wobei die Befestigungsschnittstelle (44) einen ersten Klebebereich (71.1) aufweist, insbesondere wobei der erste Klebebereich (71.1) durch ein Klebeband (71) gebildet ist.

13. Flächenelement (4) nach einem der vorhergehenden Ansprüche,
**dadurch gekennzeichnet,**
**dass** zumindest eine Soll-Schnittlinie (15) vorgesehen ist, entlang welcher ein Zuschneiden des Flächenelementes (4) zur Anpassung an eine Geometrie des Raumes (101) möglich ist, ohne die Funktion des ersten und/oder zweiten elektrischen Funktionsmittels (20, 30) vollständig zu zerstören, insbesondere wobei mehrere interne Verbindungsschnittstellen (41) vorgesehen sind und zumindest eine interne Verbindungsschnittstelle (41) beim Zuschneiden entlang der Soll-Schnittlinie (15) funktionstüchtig bleibt.

14. Elektroinstallation (1) zum Bereitstellen zumindest einer ersten elektrobasierten Funktion in einem Raum (101) eines Gebäudes (100),
**dadurch gekennzeichnet,**
**dass** ein Flächenelement (4) nach einem der Ansprüche 5 bis 13 durch eine interne Verbindungsschnittstelle (41) des Flächenelementes (4) mit einer externen Gegenverbindungsschnittstelle (43), insbesondere über eine Verbindungseinheit (96) nach einem der Ansprüche 1 bis 4, reversibel elektrisch verbunden ist.

15. Verfahren zum Bereitstellen zumindest einer ersten elektrobasierten Funktion einer Elektroinstallation (1), insbesondere nach Anspruch 14, in einem Raum (101) eines Gebäudes (100), umfassend folgenden Schritt:
- Herstellen einer reversiblen elektrischen Verbindung eines Flächenelementes (4) nach einem der Ansprüche 5 bis 13 durch eine interne Verbindungsschnittstelle (41) mit einer externen Gegenverbindungsschnittstelle (43).

## Claims

1. Connecting unit (96) for establishing an electrical connection between an internal connection interface (41) of a panel element (4) and an external mating connection interface (43), comprising
a flat connecting body (97) with at least a first contact section (97.1) for contacting a connection means (90) of the internal connection interface (41) and a second contact section (97.2) for contacting a mating connection means (93) of the external mating connection interface (43), and
a flat fastening body (98), by means of which the connecting body (97) can be fastened to the panel element (4),
wherein the first and second contact sections (97.1, 97.2) of the connecting body (97) each have at least one first contact element (97.3) for establishing the electrical connection for a first electrical functional means (20, 30) of the panel element (4) and the first contact elements (97.3) are electrically connected to one another,
wherein the fastening body (98) can be arranged on the panel element (4) from a first side of the panel element (4) and the connecting body (97) can be arranged on the panel element (4) from a second side of the panel element (4) for reversible fastening of the connecting unit (96) to the panel element (4).

2. Connecting unit (96) according to claim 1,
**characterized in that**
the first and the second contact section (97.1, 97.2) each have at least one second contact element (97.4) for establishing an electrical connection with a second electrical functional means (30) of the panel element (4), the second contact elements (97.4) of the first and the second contact section (97.1, 97.2) being electrically connected to one another, and/or **in that** the fastening body (98) is mounted on a first base side (11.1) of a first support element (11) of the panel element (4) and the connecting body (97) can be arranged on a second base side (11.2) of the first support element (11) of the panel element (4), and/or **in that** at least one magnet (99) is provided, by means of which the fastening body (98) and/or the connecting body (97) can be fastened to the panel element (4), in particular to the first support element (11).

3. Connecting unit (96) according to one of the preceding claims,
**characterized in that**
the fastening body (98) and the connecting body (97) can be magnetically fastened to one another, in particular wherein the fastening body (98) has a magnet (99) and the magnet (99) can be brought into operative connection with the first and/or second contact section (97.1, 97.2) of the connecting body (97) for magnetically fastening the fastening body (98) and the connecting body (97).

4. Connecting unit (96) according to one of the preceding claims,
**characterized in that**
the fastening body (98) has at least one positioning aid (98.1) which can be brought into operative connection with a counter-positioning aid (97.5) of the connecting body (97) and/or an alignment means (41.1) of the panel element (4), so that a misalignment of the connecting unit (96) can be prevented.

5. Panel element (4) for providing at least a first electro-based function in a room (101) of a building (100), comprising
a flexible base unit (10) which can be laid flat, having at least one first electrical functional means (20, 30) for carrying out at least the first electro-based function, the first electrical functional means (20, 30) being connected to an electrical connection (40), and the electrical connection (40) having an internal connection interface (41) for establishing a reversible electrical connection (40.1) with an external mating connection interface (43), wherein the connection interface (41) is designed for connecting the first electrical functional means (20) to a connecting unit (96) according to one of the preceding claims.

6. Panel element (4) according to claim 5,
**characterized in that**
the electrical connection (40) is arranged in an edge region (12) of the base unit (10), the first electrical functional means (20, 30) being connected to the electrical connection (40) by at least one conductor track (42), and/or **in that** the base unit (10) has a first support element (11) on which the first electrical functional means (20, 30) is arranged, in particular in a central region (13) of the base unit (10).

7. Panel element (4) according to one of the preceding claims,
**characterized in that**
the base unit (10) has a second electrical functional means (30) for executing a second electro-based function, in particular wherein the second electrical functional means (30) is connected to the electrical connection (40) or a further electrical connection (40) for executing the second electro-based function and/or wherein the base unit (10) has a second support element (11) on which the second electrical functional means (30) is arranged, and the second support element (11) is spaced apart from the first support element (11).

8. Panel element (4) according to one of the preceding claims,
**characterized in that**
the connection interface (41) is designed for connecting the second electrical functional means (30) to the connection unit (96).

9. Panel element (4) according to claim 8,
**characterized in that**
the connection interface (41) comprises at least one alignment means (41.1) which can be brought into operative connection with a positioning aid (98.1) of the connecting unit (96), so that a misalignment of the connecting unit (96) can be prevented, in particular wherein the alignment means (41.1) comprises a plurality of, preferably three, openings in the first and/or second support element (11), through which projections of the positioning aid (98.1) can be at least partially inserted, and/or
**in that** the connection interface (41) comprises at least one recess (46) in the base unit (10), into which the connection unit (96) can be at least partially inserted, in particular wherein the recess (46) is at least partially delimited by the first and/or second support element (11).

10. Panel element (4) according to one of the preceding claims,
**characterized in that**
the connection interface (41) has at least one connection means (90) with an electrical contact for electrically connecting the first electrical functional means (20) to a first contact element (97.3) of a first contact section (97.1) of the connection unit (96) and/or an electrical contact for electrically connecting the second electrical functional means (30) to a second contact element (97.4) of a first contact section (97.1) of the connection unit (96).

11. Panel element (4) according to one of the preceding claims,
**characterized in that**
the first and/or second electrical functional means (20) comprises an electrical heating means (20) for heating the room (101), and/or **in that** the first and/or second electrical functional means (30) comprises a detection means (30) for detecting an event (3) in the room (101).

12. Panel element (4) according to one of the preceding claims,
**characterized in that**
a fastening interface (44) is arranged on the base unit (10), in particular in an edge region (12) of the base unit (10), the fastening interface (44) having a first adhesive region (71.1), in particular the first adhesive region (71.1) being formed by an adhesive tape (71).

13. Panel element (4) according to one of the preceding claims,
**characterized in that**
at least one nominal cutting line (15) is provided, along which it is possible to cut the panel element (4) to fit a geometry of the room (101) without completely destroying the function of the first and/or second electrical functional means (20, 30), in particular wherein a plurality of internal connection interfaces (41) are provided and at least one internal connection interface (41) remains functional when cutting along the nominal cutting line (15).

14. An electrical installation (1) for providing at least a first electrical-based function in a room (101) of a building (100),
**characterized in that**
a panel element (4) according to one of claims 5 to 13 is reversibly electrically connected by an internal connection interface (41) of the panel element (4) to an external mating connection interface (43), in particular via a connection unit (96) according to one of claims 1 to 4.

15. Method for providing at least a first electrical-based function of an electrical installation (1), in particular according to claim 14, in a room (101) of a building (100), comprising the following step:
- Establishing a reversible electrical connection of a panel element (4) according to one of claims 5 to 13 by means of an internal connection interface (41) with an external mating connection interface (43).

## Revendications

1. Unité de connexion (96) pour établir une connexion électrique d'une interface de connexion interne (41) d'un élément de surface (4) avec une interface de connexion opposée externe (43), comprenant
un corps de liaison (97) plat avec au moins une première section de contact (97.1) pour la mise en contact d'un moyen de liaison (90) de l'interface de connexion interne (41) et une deuxième section de contact (97.2) pour la mise en contact d'un moyen de liaison complémentaire (93) de l'interface de liaison complémentaire externe (43), et
un corps de fixation (98) plat, par lequel le corps de liaison (97) peut être fixé à l'élément de surface (4),
la première et la deuxième section de contact (97.1, 97.2) du corps de liaison (97) présentant chacune au moins un premier élément de contact (97.3) pour établir la liaison électrique pour un premier moyen fonctionnel électrique (20, 30) de l'élément de surface (4) et les premiers éléments de contact (97.3) étant reliés électriquement entre eux,
le corps de fixation (98) pouvant être disposé sur l'élément de surface (4) depuis un premier côté de l'élément de surface (4) et le corps de liaison (97) pouvant être disposé sur l'élément de surface (4) depuis un deuxième côté de l'élément de surface (4) pour la fixation réversible de l'unité de connexion (96) sur l'élément de surface (4).

2. Unité de connexion (96) selon la revendication 1,
**caractérisé en ce que**
la première et la deuxième section de contact (97.1, 97.2) présentent chacune au moins un deuxième élément de contact (97.4) pour établir une liaison électrique avec un deuxième moyen fonctionnel électrique (30) de l'élément de surface (4), les deuxièmes éléments de contact (97.4) de la première et de la deuxième section de contact (97.1, 97.2) étant reliés électriquement entre eux, et/ou **en ce que** le corps de fixation (98) est fixé sur un premier côté de base (11.1) d'un premier élément de support (11) de l'élément de surface (4) et le corps de liaison (97) peut être disposé sur un deuxième côté de base (11.2) du premier élément de support (11) de l'élément de surface (4), et/ou **en ce qu'**il est prévu au moins un aimant (99) par lequel le corps de fixation (98) et/ou le corps de liaison (97) peut être fixé à l'élément de surface (4), en particulier au premier élément de support (11).

3. Unité de connexion (96) selon l'une quelconque des revendications précédentes, **caractérisé en ce que**
le corps de fixation (98) et le corps de liaison (97) peuvent être fixés magnétiquement l'un à l'autre, en particulier le corps de fixation (98) présentant un aimant (99) et l'aimant (99) pouvant être amené en liaison active avec la première et/ou la deuxième section de contact (97.1, 97.2) du corps de liaison (97) pour la fixation magnétique du corps de fixation (98) et du corps de liaison (97).

4. Unité de connexion (96) selon l'une quelconque des revendications précédentes, **caractérisé en ce que**
le corps de fixation (98) présente au moins une aide au positionnement (98.1) qui peut être amenée en liaison active avec une aide au positionnement opposée (97.5) du corps de liaison (97) et/ou un moyen d'alignement (41.1) de l'élément de surface (4), de sorte qu'un mauvais positionnement de l'unité de liaison (96) peut être empêché.

5. Elément de surface (4) pour fournir au moins une première fonction basée sur l'électricité dans une pièce (101) d'un bâtiment (100), comprenant
une unité de base (10) flexible, pouvant être posée à plat, avec au moins un premier moyen fonctionnel électrique (20, 30) pour exécuter au moins la première fonction basée sur l'électricité, le premier moyen fonctionnel électrique (20, 30) étant relié à une connexion électrique (40) et la connexion électrique (40) comportant une interface de connexion interne (41) pour établir une connexion électrique réversible (40.1) avec une interface de connexion opposée externe (43), l'interface de connexion (41) étant configurée pour connecter le premier moyen fonctionnel électrique (20) à une unité de connexion (96) selon l'une des revendications précédentes.

6. Elément de surface (4) selon la revendication 5,
**caractérisé en ce que**
la connexion électrique (40) est disposé dans une zone de bord (12) de l'unité de base (10), le premier moyen fonctionnel électrique (20, 30) étant relié à la connexion électrique (40) par au moins une piste conductrice (42), et/ou que l'unité de base (10) présente un premier élément de support (11) sur lequel le premier moyen fonctionnel électrique (20, 30) est disposé, en particulier dans une zone centrale (13) de l'unité de base (10).

7. Elément de surface (4) selon l'une des revendications précédentes,
**caractérisé en ce que**
l'unité de base (10) présente un deuxième moyen fonctionnel électrique (30) pour l'exécution d'une deuxième fonction basée sur l'électricité, en particulier le deuxième moyen fonctionnel électrique (30) étant relié à la connexion électrique (40) ou à un autre connexion électrique (40) pour l'exécution de la deuxième fonction basée sur l'électricité et/ou l'unité de base (10) présentant un deuxième élément de support (11) sur lequel est disposé le deuxième moyen fonctionnel électrique (30), et le deuxième élément de support (11) étant espacé du premier élément de support (11).

8. Elément de surface (4) selon l'une des revendications précédentes,
**caractérisé en ce que**
l'interface de connexion (41) est conçue pour relier le deuxième moyen fonctionnel électrique (30) à l'unité de connexion (96).

9. Elément de surface (4) selon la revendication 8,
**caractérisé en ce que**
l'interface de liaison (41) comprend au moins un moyen d'alignement (41.1) qui peut être amené en liaison active avec un auxiliaire de positionnement (98.1) de l'unité de connexion (96), de sorte qu'une position erronée de l'unité de connexion (96) peut être empêchée, en particulier le moyen d'alignement (41.1) comprenant plusieurs, de préférence trois, ouvertures dans le premier et/ou le deuxième élément de support (11), à travers lesquelles des saillies de l'auxiliaire de positionnement (98.1) peuvent être enfichées au moins partiellement, et/ou
**en ce que** l'interface de connexion (41) comprend au moins un évidement (46) de l'unité de base (10), dans lequel l'unité de connexion (96) peut être insérée au moins partiellement, en particulier l'évidement (46) étant délimité au moins partiellement par le premier et/ou le deuxième élément de support (11).

10. Elément de surface (4) selon l'une des revendications précédentes,
**caractérisé en ce que**
l'interface de connexion (41) présente au moins un moyen de connexion (90) avec un contact électrique pour la connexion électrique du premier moyen fonctionnel électrique (20) avec un premier élément de contact (97.3) d'une première section de contact (97.1) de l'unité de connexion (96) et/ou un contact électrique pour la connexion électrique du deuxième moyen fonctionnel électrique (30) avec un deuxième élément de contact (97.4) d'une première section de contact (97.1) de l'unité de connexion (96).

11. Elément de surface (4) selon l'une des revendications précédentes,
**caractérisé en ce que**
le premier et/ou le deuxième moyen fonctionnel électrique (20) comprend un moyen de chauffage électrique (20) pour chauffer la pièce (101), et/ou **en ce que** le premier et/ou le deuxième moyen fonctionnel électrique (30) comprend un moyen de détection (30) pour détecter un événement (3) dans la pièce (101).

12. Elément de surface (4) selon l'une des revendications précédentes,
**caractérisé en ce qu'**
une interface de fixation (44) est disposée sur l'unité de base (10), en particulier dans une zone de bord (12) de l'unité de base (10), l'interface de fixation (44) présentant une première zone de collage (71.1), en particulier la première zone de collage (71.1) étant formée par une bande adhésive (71).

13. Elément de surface (4) selon l'une des revendications précédentes,
**caractérisé en ce qu'**
il est prévu au moins une ligne de coupe théorique (15) le long de laquelle il est possible de découper l'élément de surface (4) pour l'adapter à une géométrie de la pièce (101) sans détruire complètement la fonction du premier et/ou du deuxième moyen fonctionnel électrique (20, 30), plusieurs interfaces de liaison internes (41) étant notamment prévues et au moins une interface de liaison interne (41) restant fonctionnelle lors de la découpe le long de la ligne de coupe théorique (15).

14. Installation électrique (1) pour fournir au moins une première fonction basée sur l'électricité dans une pièce (101) d'un bâtiment (100),
**caractérisé en ce qu'**
un élément de surface (4) selon l'une des revendications 5 à 13 est relié électriquement de manière réversible par une interface de liaison interne (41) de l'élément de surface (4) à une interface de liaison complémentaire externe (43), notamment par l'intermédiaire d'une unité de connexion (96) selon l'une des revendications 1 à 4.

15. Procédé pour fournir au moins une première fonction basée sur l'électricité d'une installation électrique (1), en particulier selon la revendication 14, dans une pièce (101) d'un bâtiment (100), comprenant l'étape suivante :
- Réalisation d'une connexion électrique réversible d'un élément de surface (4) selon l'une des revendications 5 à 13 par une interface de connexion interne (41) avec une interface de connexion externe complémentaire (43).
